# EUROPÄISCHE PATENTSCHRIFT

(11) **EP 0 803 543 B1**
(45) Veröffentlichungstag und Bekanntmachung des Hinweises auf die Patenterteilung: **07.03.2001**
(21) Anmeldenummer: 97810223.4
(22) Anmeldetag: 15.04.1997
(51) Int. Cl.: C09B 62/475, C09B 62/09

(54) **Faserreaktive Farbstoffe, ihre Herstellung und Verwendung**
Fiber-reactive dyes, preparation and use thereof
Colorants réactifs sur la fibre, leur préparation et leur utilisation

(30) Priorität: 24.04.1996 CH 103596
(43) Veröffentlichungstag der Anmeldung: 29.10.1997
(73) Patentinhaber: Ciba Specialty Chemicals Holding Inc., 4057 Basel (CH)
(72) Erfinder: Reichert, Hans, 79618 Rheinfelden (DE); Müller, Bernhard, 79588 Efringen-Kirchen (DE); Tzikas, Athanassios, 4133 Pratteln (DE)

(56) Entgegenhaltungen:
- BE-A- 648 452
- DE-A- 4 424 733

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind daher Verbindungen der Formel 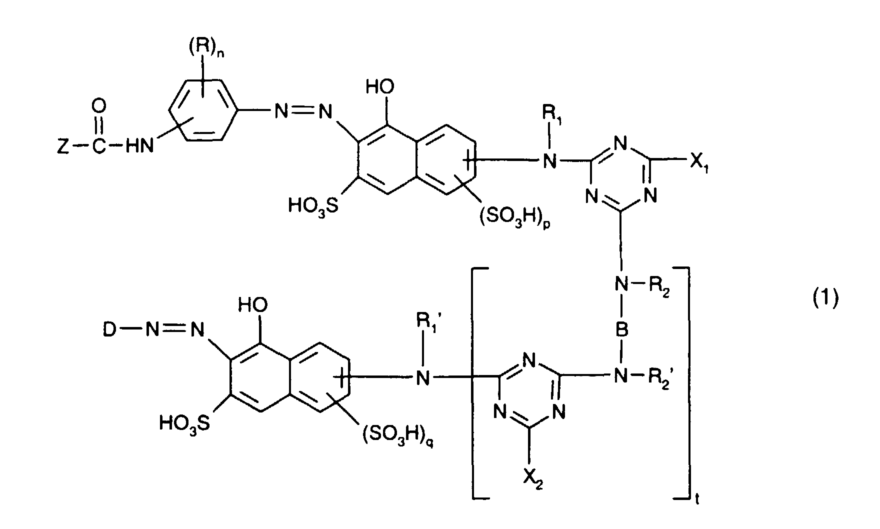 worin
B ein aliphatisches Brückenglied ist,
(R)ₙ für n gleiche oder verschiedene Reste aus der Gruppe C₁-C₄-Alkyl, C₁-C₄-Alkoxy, Halogen und Sulfo steht,
n die Zahl 0, 1 oder 2 ist,
R₁, R₁', R₂ und R₂' unabhängig voneinander je Wasserstoff oder gegebenenfalls substituiertes C₁-C₄-Alkyl bedeuten,
X₁ und X₂ unabhängig voneinander je für Halogen, 3-Carboxypyridin-1-yl oder 3-Carbamoylpyridin-1-yl stehen,
Z einen Rest -CHX-CH₂-X oder -CX=CH₂ und X Halogen bedeuten,
D ein Rest der Formel 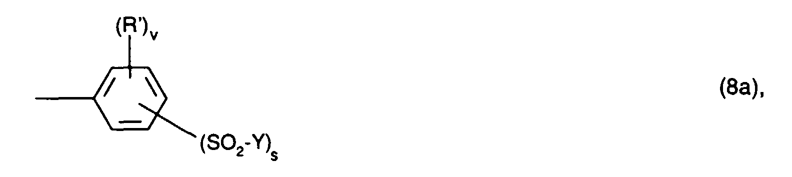 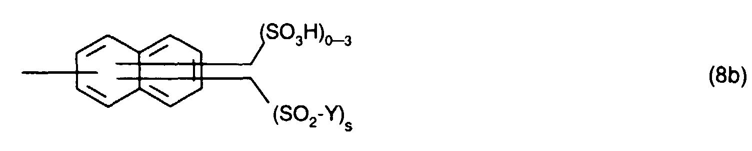 oder 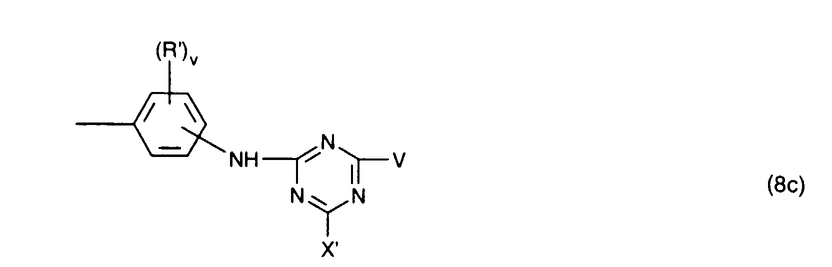 ist, worin
   (R')ᵥ für v gleiche oder verschiedene Reste aus der Gruppe Sulfo, C₁-C₄-Alkyl, C₁-C₄-Alkoxy und Halogen steht, v die Zahl 0, 1, 2 oder 3 und s die Zahl 0 oder 1 bedeuten,
   Y Vinyl oder einen Rest -CH₂-CH₂-U bedeutet und U eine alkalisch abspaltbare Gruppe ist,
   X' eine als Anion abspaltbare Gruppe bedeutet,
   V eine als Anion abspaltbare Gruppe, ein nicht-reaktiver Substituent oder ein Rest der Formel

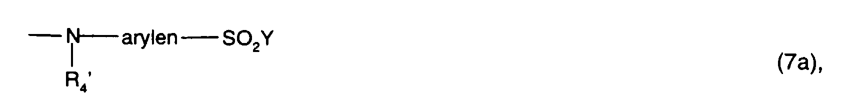

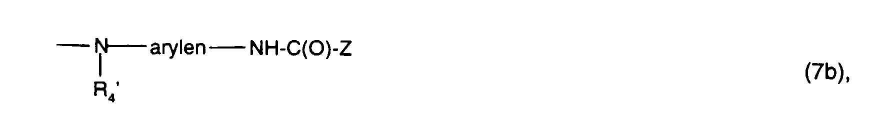

      -NH-(CH₂)₂₋₃-SO₂Y (7c)

      oder

      -NH-(CH₂)₂₋₃-O-(CH₂)₂₋₃-SO₂Y (7d)

      ist, wobei
      R₄' Wasserstoff oder gegebenenfalls substituiertes C₁-C₄-Alkyl ist,
      arylen einen unsubstituierten oder durch Sulfo, Carboxy, C₁-C₄-Alkyl, C₁-C₄-Alkoxy oder Halogen substituierten Phenylen- oder Naphthylenrest bedeutet, und für
      Y und Z die zuvor angegebenen Bedeutungen gelten,
      und p, q und t unabhängig voneinander je die Zahl 0 oder 1 bedeuten.

In der BE-A-648 452 werden Reaktivfarbstoffe offenbart, die sich von den erfindungsgemässen Farbstoffen der Formel (1) durch die Reaktivgruppen an den Diazokomponenten unterscheiden.

Die Verbindungen der Formel (1) enthalten mindestens zwei, vorzugsweise 2 bis 8 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di- oder Triethanolamins oder Na/Li- oder Na/Li/NH₄-Mischsalze genannt.

Bei B als aliphatischem Brückenglied handelt es sich z.B. um geradkettiges oder verzweigtes gegebenenfalls durch Hydroxy, C₁-C₄-Alkoxy, Sulfato oder Sulfo substituiertes und/oder einfach oder mehrfach durch -O- oder -NR₃- unterbrochenes C₂-C₁₂-Alkylen, worin R₃ Wasserstoff oder C₁-C₄-Alkyl, vorzugsweise Wasserstoff, Methyl oder Ethyl und insbesondere bevorzugt Wasserstoff ist. B steht bevorzugt für geradkettiges oder verzweigtes C₂-C₆-Alkylen, welches unsubstituiert oder durch Hydroxy, Sulfo oder Sulfato substituiert ist, und besonders bevorzugt für unsubstituiertes geradkettiges oder verzweigtes C₂-C₆-Alkylen. Beispiele für insbesondere bevorzugte Reste B sind 1,2-Ethylen, 1,3-Propylen, 2-Hydroxy-1,3-Propylen, 1,4-Butylen, 2-Methyl-1,5-pentylen, 1,6-Hexylen und besonders 1,2-Propylen.

p bedeutet bevorzugt die Zahl 1; q bedeutet bevorzugt die Zahl 0; t bedeutet in einer bevorzugten Ausführungsform die Zahl 0 und in einer anderen bevorzugten Ausführungsform die Zahl 1.

Bedeuten R₁, R₁', R₂ oder R₂' gegebenenfalls substituiertes C₁-C₄-Alkyl, kann es sich z.B. um unsubstituiertes oder z.B. durch Hydroxy, Sulfo, Sulfato, Carboxy, Cyano, Halogen, C₁-C₄-Alkoxycarbonyl oder Carbamoyl substituiertes Methyl, Ethyl, n- oder iso-Propyl oder n-, sec.-, tert.- oder iso-Butyl handeln.

R₁ und R₁' bedeuten unabhängig voneinander je bevorzugt Wasserstoff oder C₁-C₄-Alkyl, besonders bevorzugt Wasserstoff, Methyl oder Ethyl und insbesondere bevorzugt Wasserstoff.

R₂ und R₂' stehen unabhängig voneinander je bevorzugt für Wasserstoff oder unsubstituiertes oder durch Hydroxy substituiertes C₁-C₄-Alkyl, besonders bevorzugt für Wasserstoff, Methyl, Ethyl oder β-Hydroxyethyl und insbesondere bevorzugt für Wasserstoff.

X₁ und X₂ bedeuten unabhängig voneinander je bevorzugt Fluor oder Chlor. X₁ und X₂ können verschieden oder gleich sein. X₁ bedeutet besonders bevorzugt Chlor.

X steht bevorzugt für Brom oder Chlor und besonders bevorzugt für Brom.

R bedeutet bevorzugt Methyl, Methoxy, Chlor oder Sulfo und besonders bevorzugt Sulfo, Methyl oder Methoxy.

n steht bevorzugt für die Zahl 1 oder 2 und besonders bevorzugt je die Zahl 1.

(R)ₙ steht bevorzugt für 1 oder 2 gleiche oder verschiedene Reste aus der Gruppe Methyl, Methoxy und Sulfo und besonders bevorzugt für 1 oder 2 Sulfogruppen.

Bedeutet R₄' gegebenenfalls substituiertes C₁-C₄-Alkyl, kann es sich z.B. um unsubstituiertes oder z.B. durch Hydroxy, Sulfo, Sulfato, Carboxy, Cyano, Halogen,
C₁-C₄-Alkoxycarbonyl oder Carbamoyl substituiertes Methyl, Ethyl, n- oder iso-Propyl oder n-, sec.-, tert.- oder iso-Butyl handeln.

R₄' bedeutet bevorzugt Wasserstoff oder C₁-C₄-Alkyl, besonders bevorzugt Wasserstoff, Methyl oder Ethyl und insbesondere bevorzugt Wasserstoff.

Bedeutet Y einen Rest -CH₂-CH₂-U, so kann es sich bei der Abgangsgruppe U z.B. um -Cl, -Br, -F, -OSO₃H, -SSO₃H, -OCO-CH₃, OPO₃H₂, -OCO-C₆H₅, OSO₂-C₁-C₄-Alkyl oder -OSO₂-N(C₁-C₄-Alkyl)₂ handeln. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

Für den Rest Z gelten die zuvor angegebenen Bedeutungen und Bevorzugungen.

X' steht z.B. für Fluor, Chlor, Brom, Sulfo, C₁-C₄-Alkylsulfonyl oder Phenylsulfonyl und bevorzugt für Fluor oder Chlor.

Arylen ist vorzugsweise ein Phenylenrest, insbesondere ein 1,3- oder 1,4-Phenylenrest, der unsubstituiert oder z.B. durch Sulfo, Methyl, Methoxy oder Carboxy substituiert ist.

Bedeutet V eine als Anion abspaltbare Gruppe, so handelt es sich hierbei z.B. um Fluor, Chlor, Brom, Sulfo, C₁-C₄-Alkylsulfonyl oder Phenylsulfonyl und bevorzugt um Fluor oder Chlor.

Steht V für einen nicht-reaktiven Substituenten, so kann dieser z.B. Hydroxy; C₁-C₄-Alkoxy; C₁-C₄-Alkylthio; Amino; ein- oder zweifach durch C₁-C₈-Alkyl substituiertes Amino, wobei das Alkyl gegebenenfalls z.B. durch Sulfo, Sulfato, Hydroxy, Carboxy oder Phenyl, insbesondere durch Sulfo oder Hydroxy, weitersubstituiert ist und gegebenenfalls durch einen Rest -O- unterbrochen ist; Cyclohexylamino; Morpholino; N-C₁-C₄-Alkyl-N-phenylamino oder Phenylamino oder Naphthylamino, wobei das Phenyl oder Naphthyl gegebenenfalls z.B. durch C₁-C₄-Alkyl, C₁-C₄-Alkoxy, Carboxy, Sulfo oder Halogen substituiert ist, bedeuten.

Beispiele für geeignete nicht-reaktive Substituenten V sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Substituent hat V vorzugsweise die Bedeutung Amino; N-Mono- oder N,N-Di-C₁-C₄-Alkylamino, das im Alkylteil unsubstituiert oder durch Hydroxy, Sulfato oder Sulfo substituiert ist und gegebenenfalls durch einen Rest -O- unterbrochen ist; Morpholino; Phenylamino oder N-C₁-C₄-Alkyl-N-phenylamino, worin das Phenyl jeweils unsubstituiert oder durch Sulfo, Carboxy, Methyl oder Methoxy substituiert ist. Besonders bevorzugt sind die Bedeutungen als N-Mono- oder N,N-Di-C₁-C₄-Alkylamino, das im Alkylteil unsubstituiert oder durch Hydroxy oder Sulfo substituiert ist und gegebenenfalls durch einen Rest -O- unterbrochen ist.

Als reaktive Reste sind für V solche der Formeln (7a) und (7b), insbesondere solche der Formel (7a), bevorzugt. Hierbei steht Z bevorzugt für die Gruppe -CHBr-CH₂-Br oder -CBr=CH₂ und Y für Vinyl oder β-Sulfatoethyl.

V ist bevorzugt Fluor oder Chlor; N-Mono- oder N,N-Di-C₁-C₄-Alkylamino, das im Alkylteil unsubstituiert oder durch Hydroxy oder Sulfo substituiert ist und gegebenenfalls durch einen Rest -O- unterbrochen ist; oder ein reaktiver Rest der Formeln (7a) bis (7d).

Besonders bevorzugt ist V N-Mono- oder N,N-Di-C₁-C₄-Alkylamino, das im Alkylteil unsubstituiert oder durch Hydroxy oder Sulfo substituiert ist und gegebenenfalls durch einen Rest -O- unterbrochen ist; oder ein reaktiver Rest der Formel (7a) oder (7b), insbesondere der Formel (7a).

Ganz besonders bevorzugt ist V ein reaktiver Rest der Formel (7a) oder (7b), insbesondere der Formel (7a).

Bevorzugt sind Reste D der oben angegebenen Formeln (8a) und (8b). Besonders bevorzugte Reste D entsprechen der oben angegebenen Formel (8a), worin (R')ᵥ für v gleiche oder verschiedene Reste aus der Gruppe Methyl, Methoxy und Sulfo steht, Y Vinyl oder β-Sulfatoethyl bedeutet und v die Zahl 0, 1 oder 2 und s die Zahl 0 oder 1 sind, wobei die Summe von (v+s) ≥ 1 beträgt.

Eine bevorzugte Gruppe von erfindungsgemässen Verbindungen entspricht der zuvor angegebenen Formel (1), worin B geradkettiges oder verzweigtes C₂-C₆-Alkylen, welches unsubstituiert oder durch Hydroxy, Sulfo oder Sulfato substituiert ist, bedeutet, (R)ₙ für n gleiche oder verschiedene Reste aus der Gruppe C₁-C₄-Alkyl, C₁-C₄-Alkoxy und Sulfo steht, n die Zahl 0, 1 oder 2 ist, R₁ und R₁' unabhängig voneinander je für Wasserstoff oder C₁-C₄-Alkyl stehen, R₂ und R₂' unabhängig voneinander je Wasserstoff oder unsubstituiertes oder durch Hydroxy substituiertes C₁-C₄-Alkyl bedeuten, X₁ und X₂ unabhängig voneinander je Chlor oder Fluor sind, Z für einen Rest -CHX-CH₂-X oder -CX=CH₂ steht und X Chlor oder Brom bedeutet, D ein unsubstituierter oder durch Sulfo, C₁-C₄-Alkyl, C₁-C₄-Alkoxy, Halogen oder durch einen faserreaktiven Rest -SO₂-Y substituierter Phenyl- oder Naphthylrest ist, Y für Vinyl oder β-Sulfatoethyl steht, und p, q und t unabhängig voneinander je die Zahl 0 oder 1 bedeuten.

Eine Gruppe von besonders bevorzugten Verbindungen entspricht der Formel 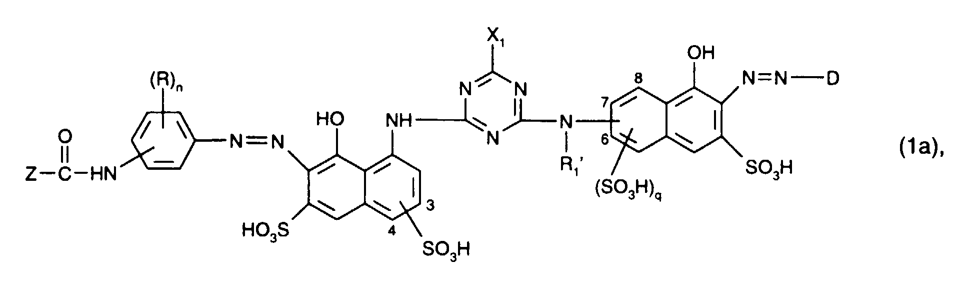 worin Z die Gruppe -CHBr-CH₂Br oder -CBr=CH₂ bedeutet, (R)ₙ für 0 bis 2 gleiche oder verschiedene Reste aus der Gruppe Sulfo, Methyl und Methoxy steht, X₁ Chlor ist, R₁' Wasserstoff, Methyl oder Ethyl bedeutet, q für die Zahl 0 oder 1 steht und für D die zuvor angegebenen Bedeutungen und Bevorzugungen gelten, insbesondere worin D ein Rest der Formel 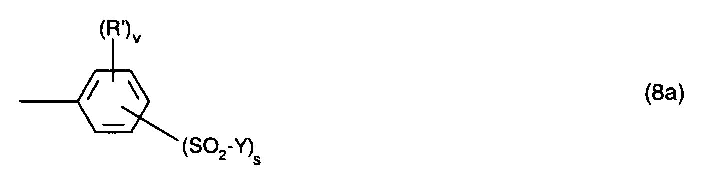 ist, worin (R')ᵥ für v gleiche oder verschiedene Reste aus der Gruppe Methyl, Methoxy und Sulfo steht, Y Vinyl oder β-Sulfatoethyl bedeutet und v die Zahl 0, 1 oder 2 und s die Zahl 0 oder 1 sind, wobei die Summe von (v+s) ≥ 1 beträgt.

Insbesonders bevorzugte Verbindungen der Formel (1a) sind dadurch gekennzeichnet, dass
(i) (R')ᵥ für 1 oder 2 Sulfogruppen steht;
(ii) die 2. Sulfogruppe im linken Aminonaphtholsulfonsäurerest in der 3-Position gebunden ist;
(iii) q für die Zahl 0 steht und der Rest -NR₁ in der 6-Position am rechten Aminonaphtholsulfonsäurerest gebunden ist;
(iv) D ein durch 1 bis 3 gleiche oder verschiedene Reste aus der Gruppe Methyl, Methoxy und Sulfo substituierter Phenylrest ist;
(v) D ein Phenylrest ist, der durch eine Gruppe -SO₂-Y, worin für Y die zuvor angegebenen Bedeutungen und Bevorzugungen gelten, substituiert ist und keine weiteren Reste trägt oder durch Methyl, Methoxy oder Sulfo weitersubstituiert ist.

Eine weitere Gruppe von besonders bevorzugten Verbindungen entspricht der Formel 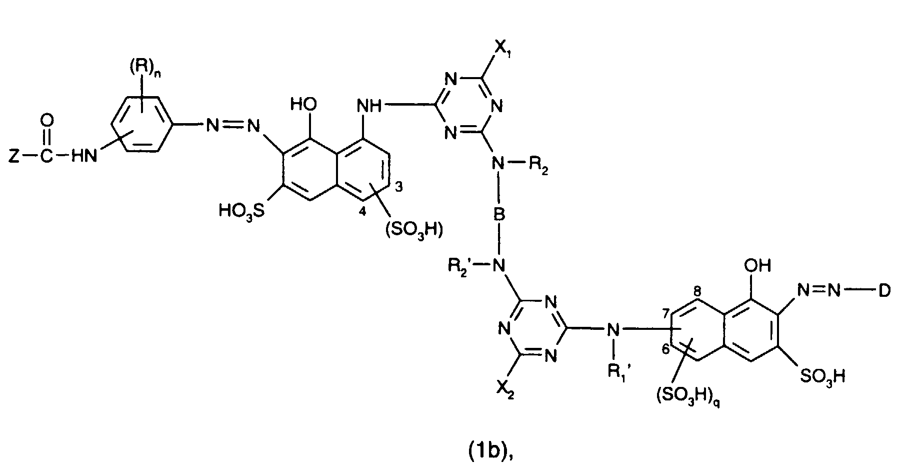 worin Z die Gruppe -CHBr-CH₂Br oder -CBr=CH₂ bedeutet, (R)ₙ für 0 bis 2 gleiche oder verschiedene Reste aus der Gruppe Sulfo, Methyl und Methoxy steht, X₁ Chlor und X₂ Chlor oder Fluor sind, R₁' Wasserstoff, Methyl oder Ethyl und R₂ und R₂' unabhängig voneinander je Wasserstoff, Methyl, Ethyl oder β-Hydroxyethyl bedeuten, q für die Zahl 0 oder 1 steht und für D die oben angegebenen Bedeutungen und Bevorzugungen gelten, insbesondere worin D ein Rest der Formel 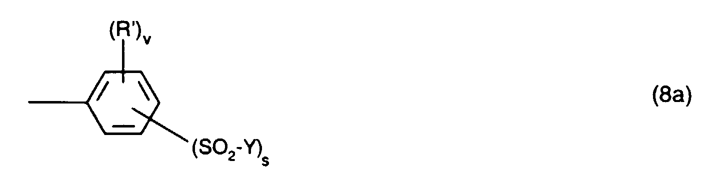 ist, worin (R')ᵥ für v gleiche oder verschiedene Reste aus der Gruppe Methyl, Methoxy und Sulfo steht, Y Vinyl oder β-Sulfatoethyl bedeutet und v die Zahl 0, 1 oder 2 und s die Zahl 0 oder 1 sind, wobei die Summe von (v+s) ≥ 1 beträgt.

Gegenstand der vorliegenden Erfindung ist ferner ein Verfahren zur Herstellung der Verbindungen der Formel (1), welches dadurch gekennzeichnet ist, dass man je in etwa 1 Moläquivalent einer Verbindung der Formel 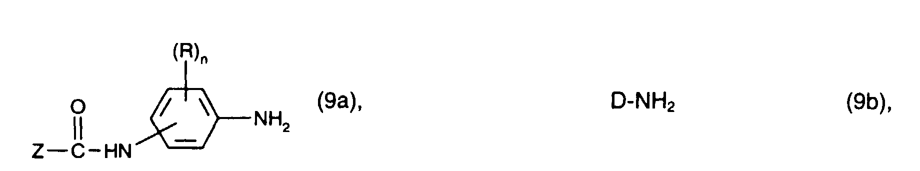 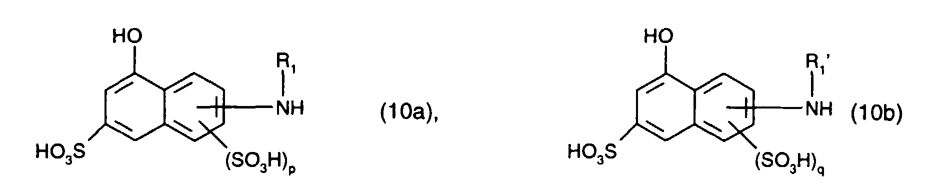 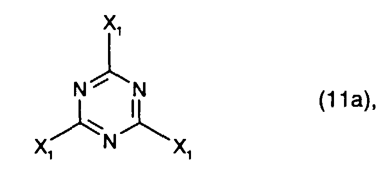 und, wenn t die Zahl 1 bedeutet, zusätzlich jeweils in etwa 1 Moläquivalent einer Verbindung der Formel 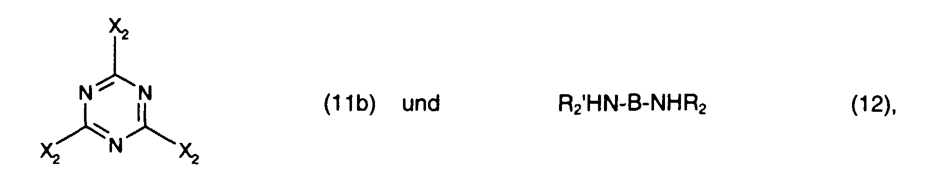 in beliebiger Reihenfolge miteinander umsetzt, wobei B, D, (R)ₙ, R₁, R₁', R₂, R₂' X₁, X₂, Z, p, q und t jeweils die zuvor angegebene Bedeutung haben.

Die Diazotierung der Verbindungen der Formeln (9a) und (9b) und ihre Kupplung mit den Verbindungen der Formeln (10a) und (10b) bzw. einem Umsetzungsprodukt der Verbindungen der Formeln (10a) und (11a) bzw. gegebenenfalls (10b) und (11b) und (12) erfolgt in üblicher Weise, z.B. indem man die Verbindung der Formel (9a) bzw. (9b) in mineralsaurer Lösung, z.B. salzsaurer Lösung mit einem Nitrit, z.B. Natriumnitrit, bei niedriger Temperatur, z.B. bei 0 bis 5°C, diazotiert und anschliessend in neutralem bis leicht saurem Medium, z.B. bei pH 3 bis 7 und bevorzugt 5 bis 6,5, und niedrigen Temperaturen, z.B. 0 bis 30°C, mit der entsprechenden Kupplungskomponente kuppelt.

Die Kondensationsreaktionen zwischen den Verbindungen der Formeln (10a), (10b), (11a), (11b) und (12) erfolgen im allgemeinen analog zu bekannten Verfahren, in der Regel in wässriger Lösung bei Temperaturen von z.B. 0 bis 50°C und einem pH-Wert von z.B. 4 bis 10.

Die wichtigsten Verfahrensvarianten sind in den Beispielen beschrieben.

Die Verbindungen der Formeln (9a), (9b), (10a), (10b), (11a), (11b) und (12) sind bekannt oder können in Analogie zu bekannten Verbindungen hergestellt werden.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasem und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffmischungen und die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und insbesondere die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 19 Teile Cyanurchlorid werden mit 50 Teilen Eis/Wasser und 5 Teilen Dinatriumhydrogenphosphat unter Zusatz eines Netzmittels kräftig durchmischt. Zu der entstandenen Suspension wird eine neutrale Lösung von 32 Teilen 1-Amino-8-hydroxynaphthalin-3,6-disulfonsäure (H-Säure) so zugetropft, dass die Reaktionsmischung einen pH-Wert von 3 nicht überschreitet. Man hält danach noch für 2 Stunden den pH-Wert bei 3 durch Zugabe von Natriumhydroxidlösung (Reaktionsmischung 1).

28 Teile 2-(4-Aminophenylsulfonyl)-ethyl-hydrogensulfat werden in 300 Teilen Wasser suspendiert und mit gesättigter Natriumcarbonat-Lösung bei pH 6 gelöst, auf 0°C abgekühlt, mit 7 Teilen Natriumnitrit, 50 Teilen Eis und 30 Teilen konz. HCI versetzt und 2 Stunden diazotiert. Danach wird überschüssiges Nitrit mit Sulfaminsäure vernichtet (Diazolösung 1).

Die beiden oben erhaltenen Reaktionsmischungen werden vereinigt, der pH-Wert im Lauf von 3 Stunden mit Natriumacetat-Lösung auf 3,5 angehoben und die Temperatur zwischen 0 und 5°C gehalten. Man erwärmt dann auf 30 bis 35°C und tropft eine neutrale Lösung von 32 Teilen H-Säure in 300 Teilen Wasser so zu, dass ein pH-Wert von 3,5 nicht überschritten wird (Reaktionslösung 2).

40 Teile 5-(2,3-Dibrompropionylamido)-anilin-2-sulfonsäure werden in 400 Teilen Wasser suspendiert, mit 7 Teilen Natriumnitrit, 50 Teilen Eis und 30 Teilen konz. HCI versetzt und 3 Stunden lang gerührt. Ueberschüssiges Nitrit wird mit Sulfaminsäure vernichtet und die erhaltenen Suspension zu der oben hergestellten Reaktionsmischung 2 gegeben. Man stellt den pH-Wert innerhalb von ca. 2 Stunden mit verdünnter Natriumhydroxidlösung auf 7 ein, erwärmt anschliessend auf eine Innentemperatur von 30°C, erhöht den pH-Wert auf 11 und hält ihn während 30 Minuten bei diesem Wert mit verdünnter Natriumhydroxidlösung. Am Ende wird die Reaktionsmischung mit verdünnter HCI auf einen pH-Wert von 7 eingestellt, dialytisch entsalzt und im Vakuum eingedampft. Man erhält die Verbindung der Formel 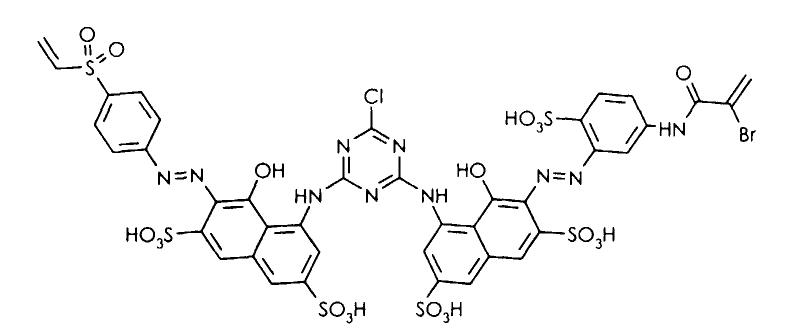 als Pulver, welches Cellulose in roten Tönen mit guten Allgemeinechtheiten färbt.

Beispiel 2: 19 Teile Cyanurchlorid werden mit 50 Teilen Eis/Wasser und 5 Teilen Dinatriumhydrogenphosphat unter Zusatz eines Netzmittels kräftig durchmischt. Zu der entstandenen Suspension wird eine neutrale Lösung von 32 Teilen 1-Amino-8-hydroxynaphthalin-3,6-disulfonsäure (H-Säure) so zugetropft, dass die Reaktionsmischung einen pH-Wert von 3 nicht überschreitet. Man hält danach noch für 2 Stunden den pH-Wert bei 3 durch Zugabe von Natriumhydroxidlösung (Reaktionsmischung 3).

40 Teile 5-(2,3-Dibrompropionylamido)-anilin-2-sulfonsäure werden in 400 Teilen Wasser suspendiert, mit 7 Teilen Natriumnitrit, 50 Teilen Eis und 30 Teilen konz. HCI versetzt und 3 Stunden lang gerührt. Ueberschüssiges Nitrit wird mit Sulfaminsäure vernichtet und die erhaltenen Suspension zu der oben hergestellten Reaktionsmischung 3 gegeben. Man hebt den pH-Wert im Lauf von 3 Stunden mit Natriumacetat-Lösung auf 3,5 an, erwärmt auf 30 bis 35°C, tropft eine neutrale Lösung von 24 Teilen 2-Amino-5-hydroxynaphthalin-7-sulfonsäure in 250 Teilen Wasser so zu, dass ein pH-Wert von 3,5 nicht überschritten wird und hält diesen pH-Wert für weitere 5 Stunden (Reaktionslösung 4).

28 Teile 2-(4-Aminophenylsulfonyl)-ethyl-hydrogensulfat werden in 300 Teilen Wasser suspendiert und mit gesättigter Natriumcarbonat-Lösung bei pH 6 gelöst, auf 0°C abgekühlt, mit 7 Teilen Natriumnitrit, 50 Teilen Eis und 30 Teilen konz. HCI versetzt und 2 Stunden diazotiert. Danach wird überschüssiges Nitrit mit Sulfaminsäure vernichtet. Die so erhaltene Diazoniumlösung wird zur oben hergestellten Reaktionslösung 4 getropft und dabei der pH-Wert durch Zugabe von Natriumhydroxidlösung bei 7 gehalten. Man erwärmt anschliessend auf eine Innentemperatur von 30°C, erhöht den pH-Wert auf 11 und hält ihn während 30 Minuten bei diesem Wert mit verdünnter Natriumhydroxidlösung. Am Ende wird die Reaktionsmischung mit verdünnter HCI auf einen pH-Wert von 7 eingestellt, dialytisch weitgehend entsalzt und im Vakuum eingedampft. Man erhält die Verbindung der Formel 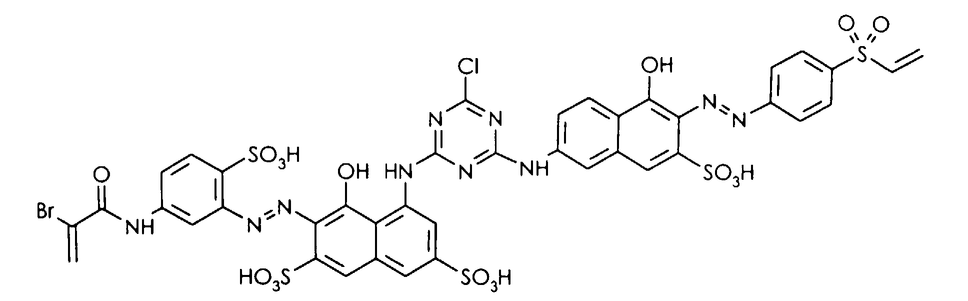 als Pulver, welches Cellulose in roten Tönen mit guten Allgemeinechtheiten färbt.

Beispiele 3-25: Analog wie im Beispiel 1 oder 2 beschrieben lassen sich die folgenden Farbstoffe herstellen, die jeweils Cellulose in einer roten Nuance mit guten Allgemeinechtheiten färben.

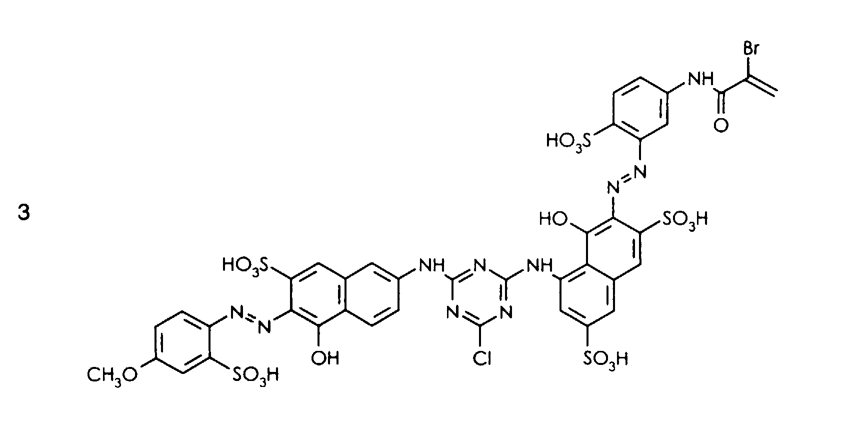

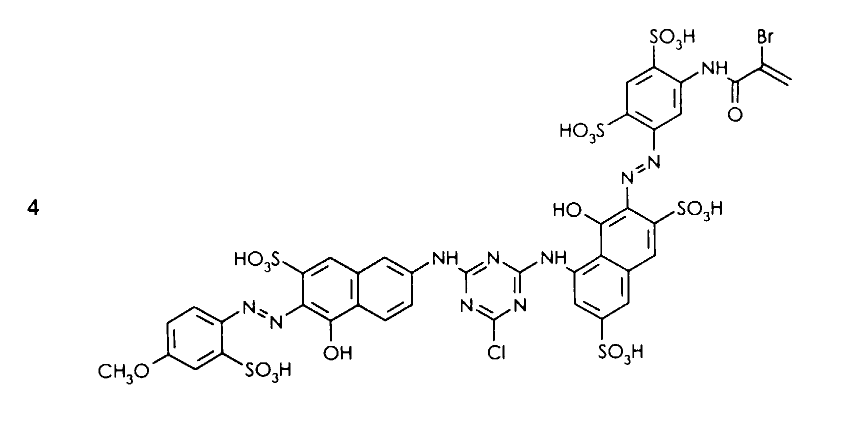

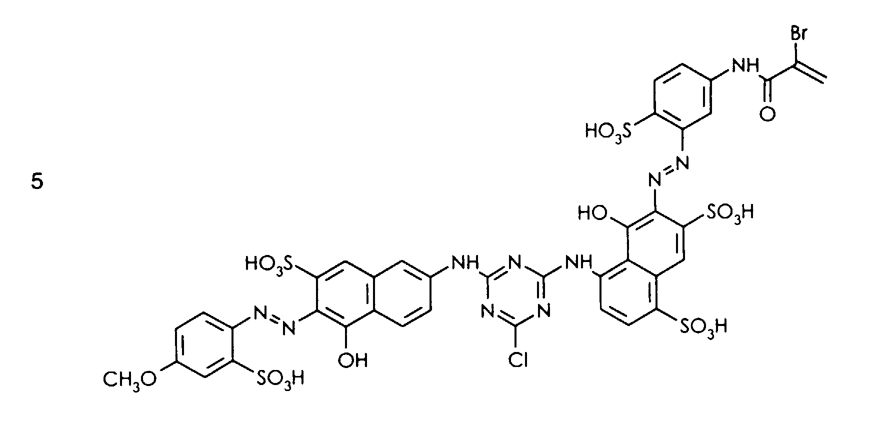

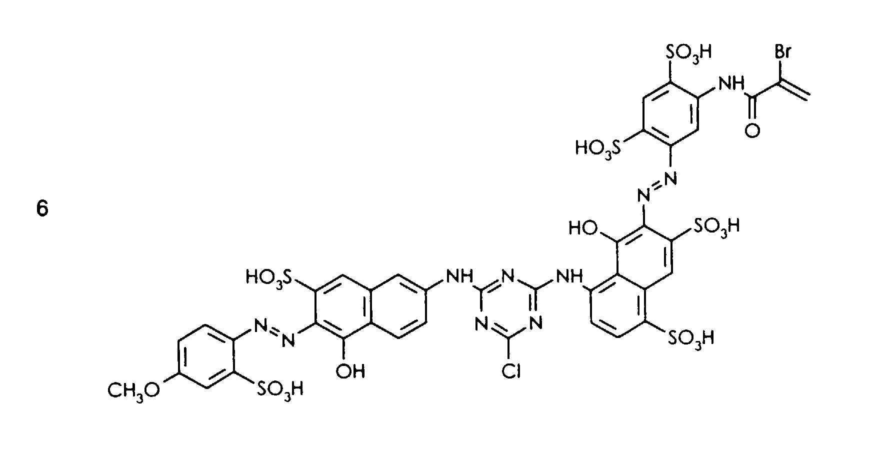

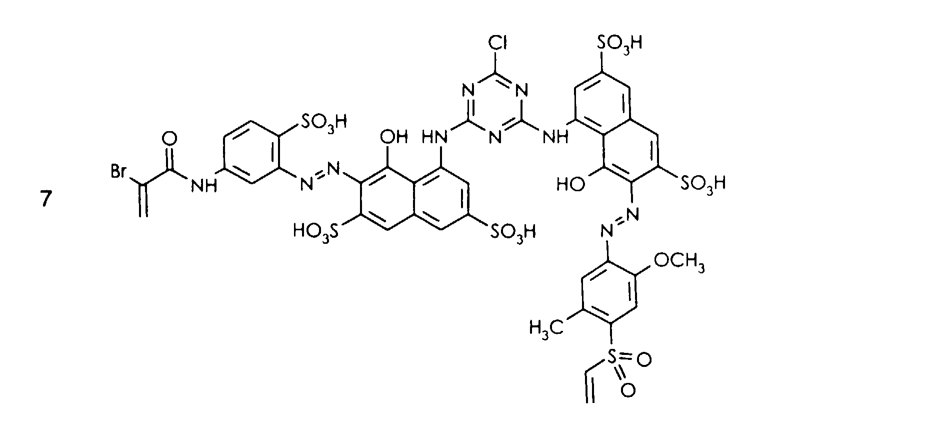

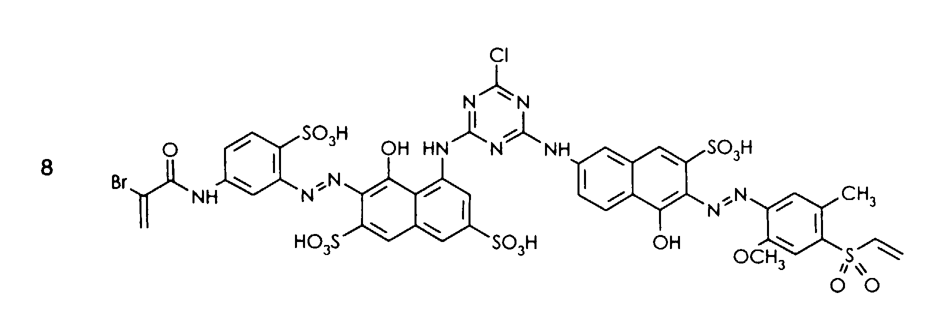

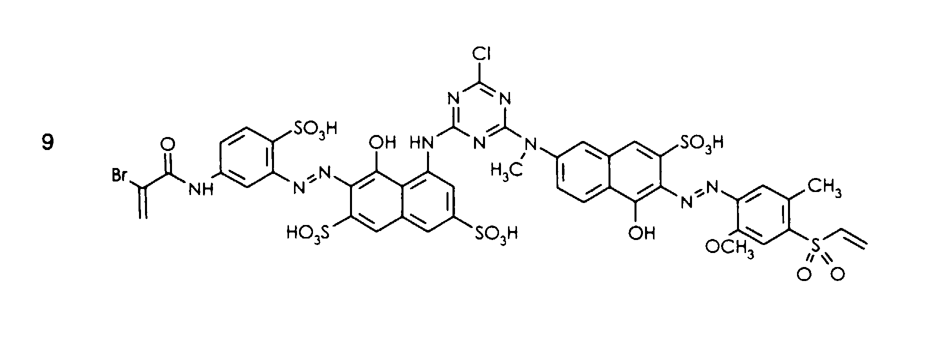

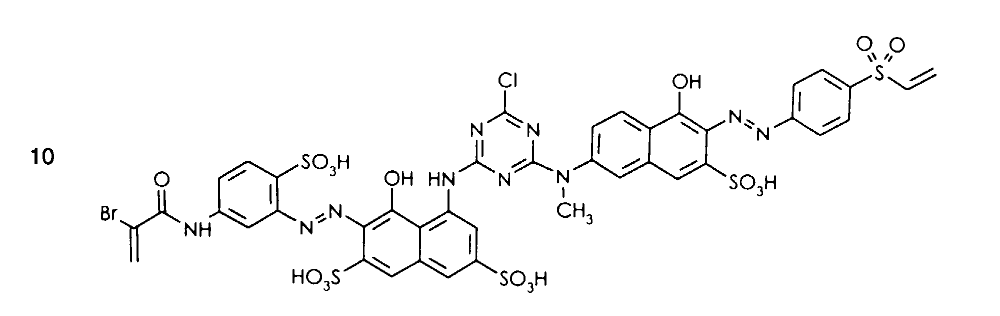

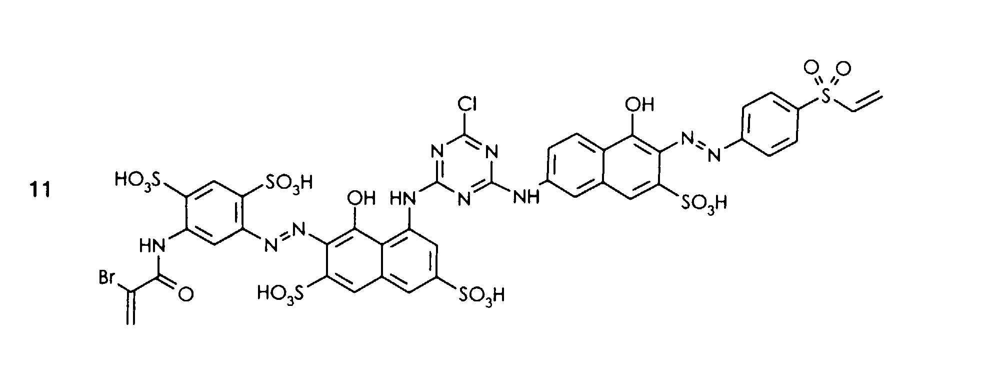

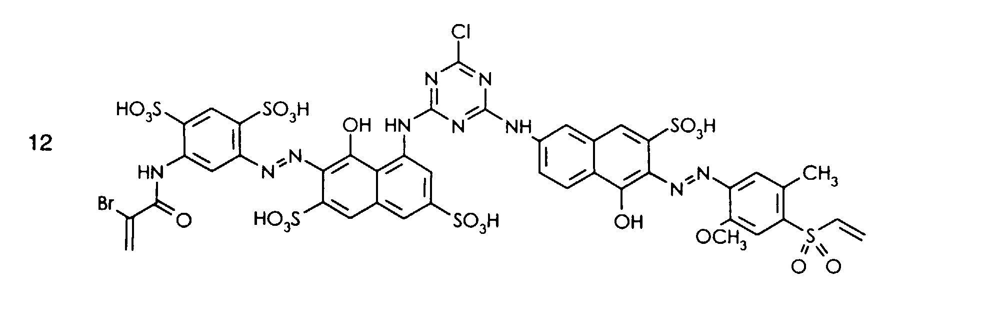

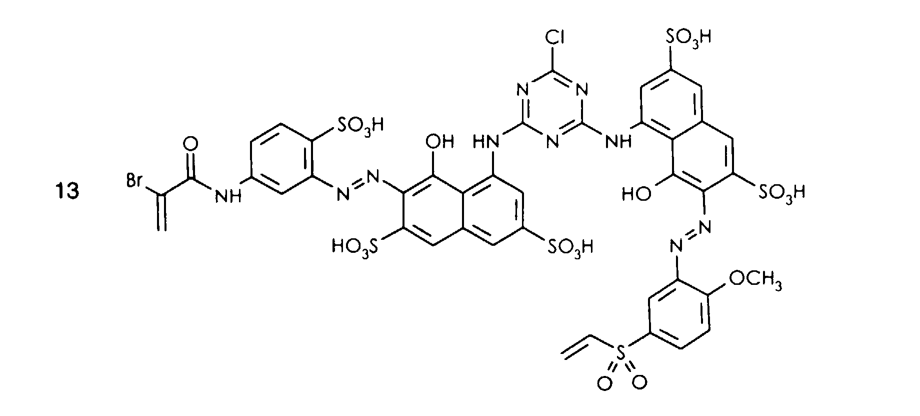

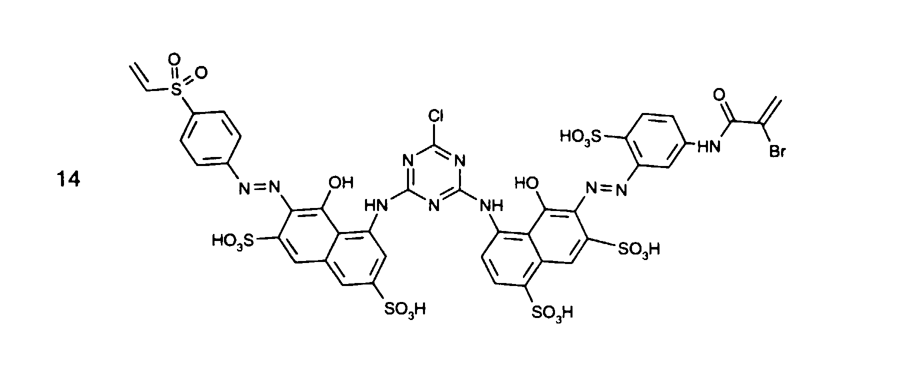

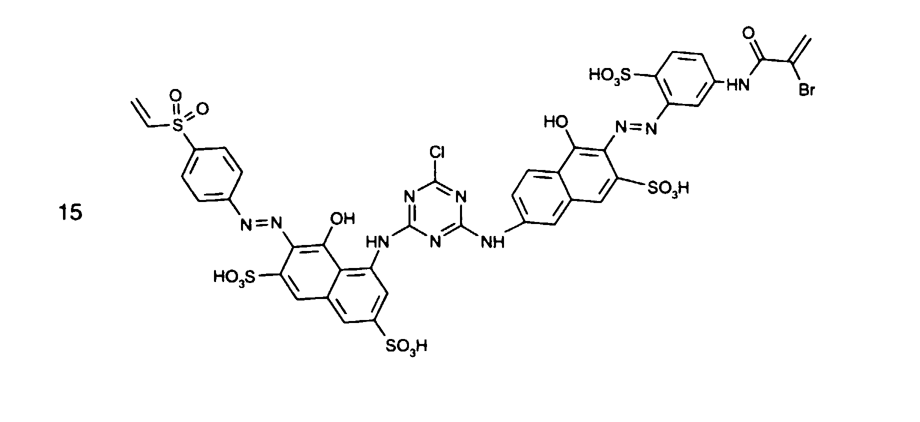

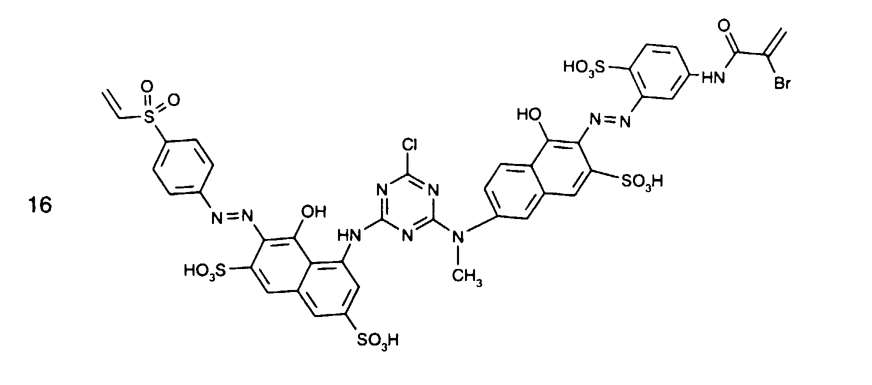

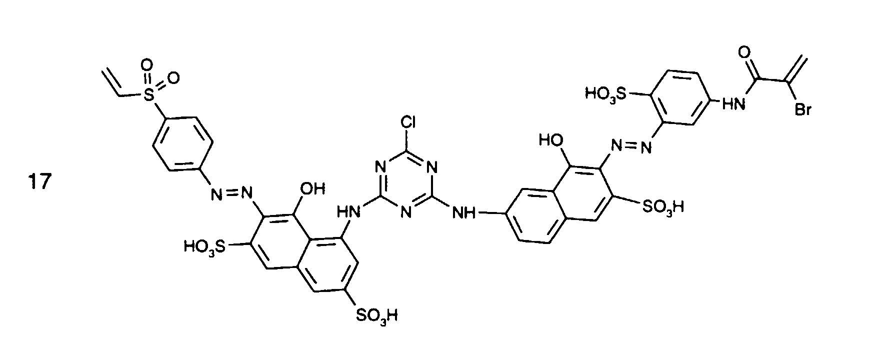

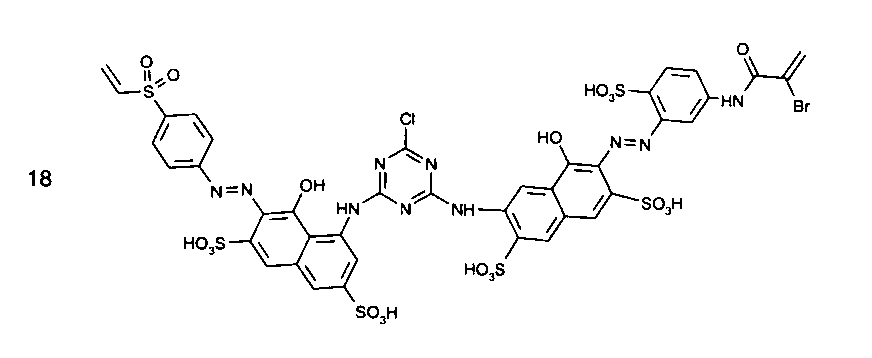

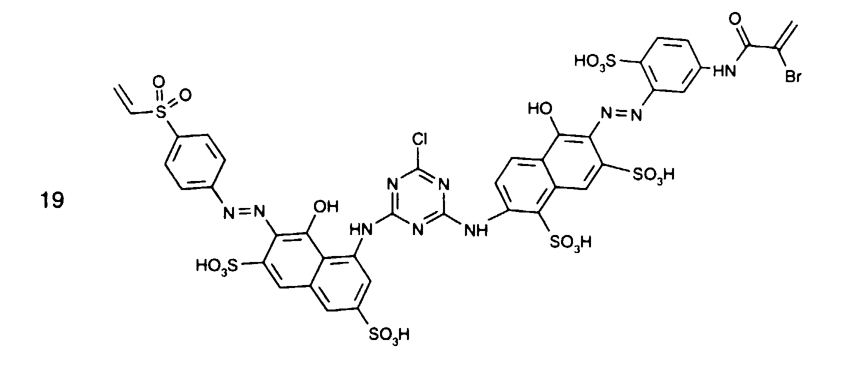

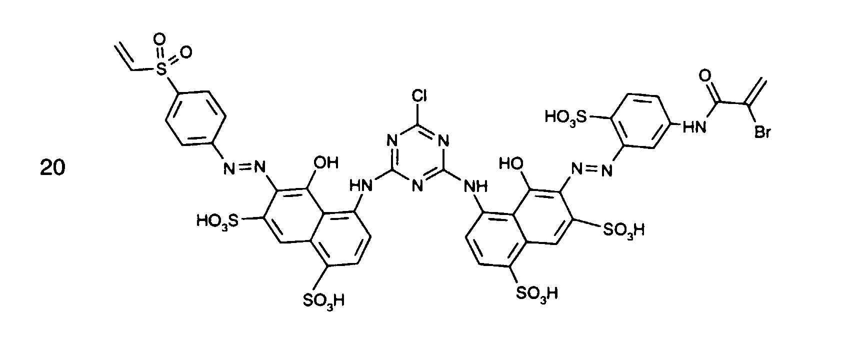

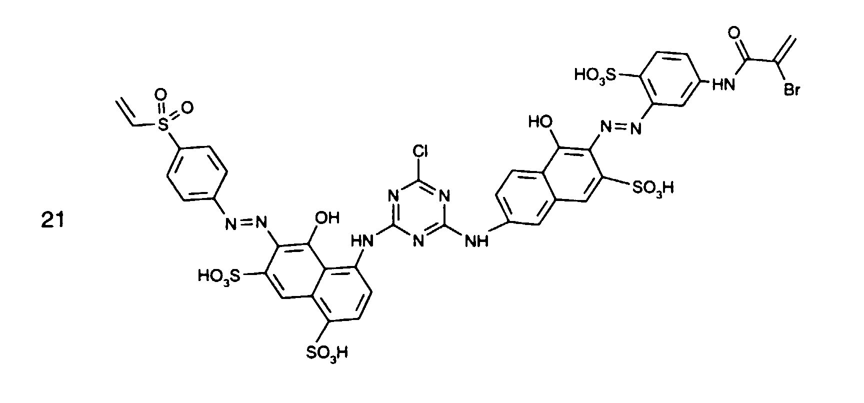

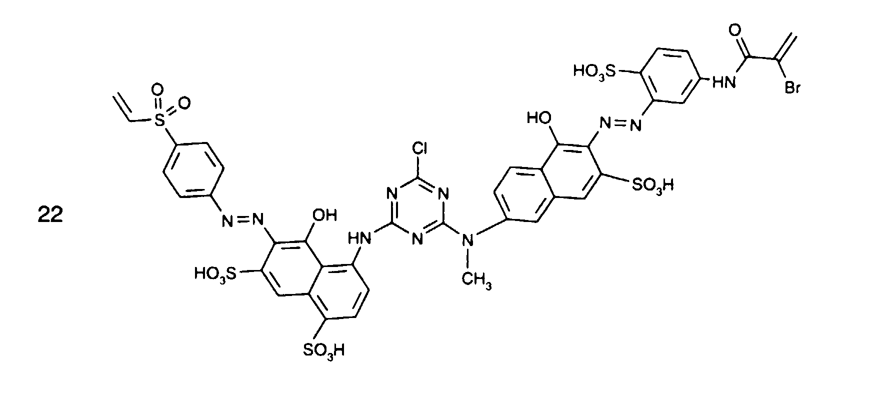

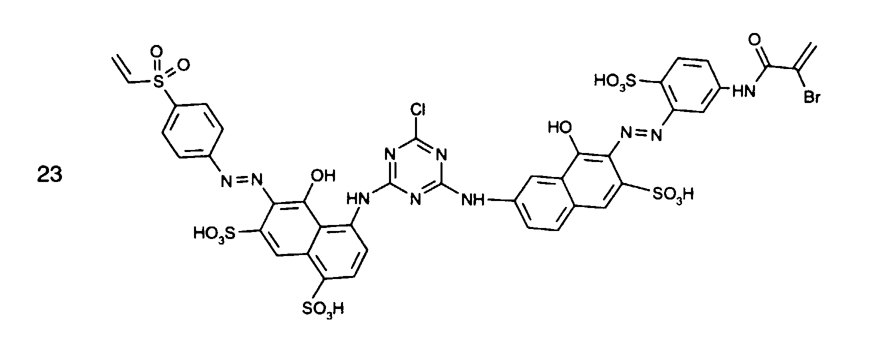

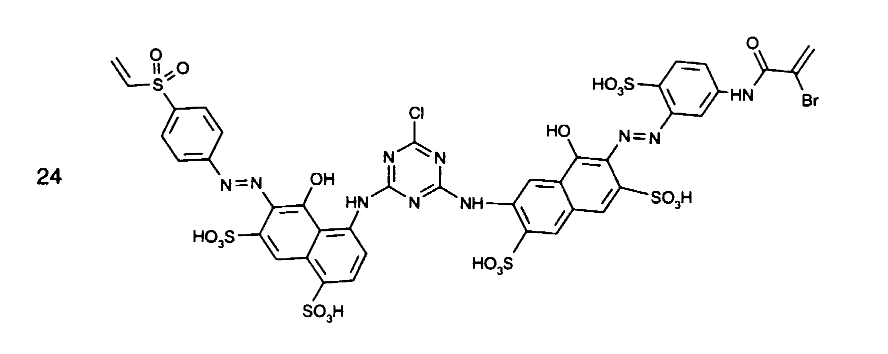

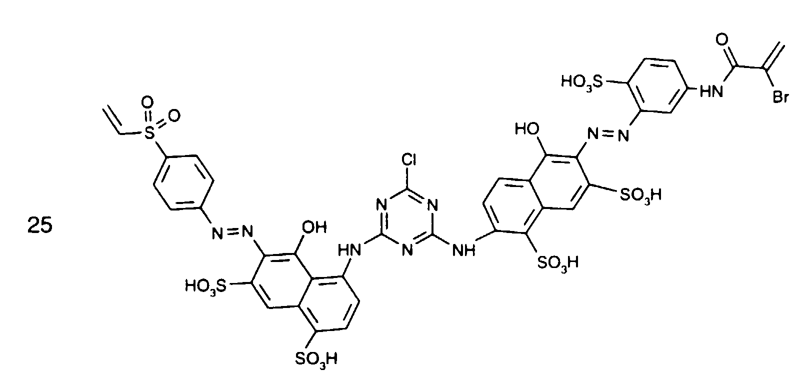

### Beispiel 26:

(i) Die Diazolösung 1 gemäss Beispiel 1 wird in ca. 30 Minuten zur Reaktionsmischung 1 gemäss Beispiel 1 gegeben, der pH-Wert innerhalb drei Stunden mit gesättigter Natriumacetat-Lösung auf 4,5 angehoben und die Temperatur zwischen 0 und 5°C gehalten.
   Nachdem die Kupplung komplett ist, gibt man zur erhaltenen Reaktionsmischung eine mit Salzsäure neutralisierte Lösung von 15 Teilen 1,2-Diaminopropan in 150 Teilen Wasser, hält den pH-Wert mit 4N Natronlauge bei 5 und lässt auf Raumtemperatur erwärmen. Nach beendeter Reaktion wird das Reaktionsprodukt der Formel 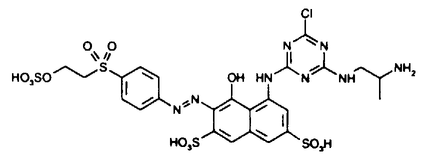 durch Zugabe von Kaliumchlorid ausgefällt, abfiltriert, mit gesättigter Kaliumchlorid-Lösung gewaschen und im Vakuum bei 40°C getrocknet.
(ii) 40 Teile 5-(2,3-Dibrompropionylamido)-anilin-2-sulfosäure werden in 400 Teilen Wasser suspendiert, mit 7 Teilen Natriumnitrit, 50 Teilen Eis und 30 Teilen konzentrierter Salzsäure versetzt und drei Stunden lang gerührt. Nach der Zerstörung von überschüssigem Nitrit mit Sulfaminsäure wird die Suspension zu einem weiteren Ansatz der Reaktionsmischung 1 gemäss Beispiel 1 getropft und der pH-Wert mit festem Natriumacetat innerhalb von 2 Stunden auf 4,5 erhöht, wobei sich nach erfolgter Kupplung die Verbindung der Formel 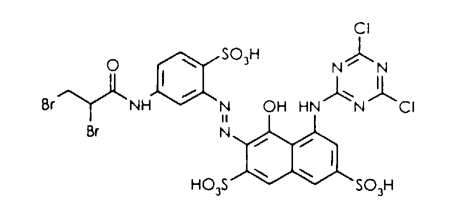 ergibt.
(iii) 80 Teile der gemäss (i) hergestellten Verbindung werden in 600 Teilen warmen Wasser suspendiert und bei pH 8,5 zu der gemäss (ii) hergestellten Reaktionsmischung getropft. Man hält den pH für die Dauer der Kondensation mit verdünnter Natriumhydroxid-Lösung bei 8,5, erwärmt dann auf 30°C und hält den pH-Wert für 30 Minuten bei 11. Nach Neutralisation mit verdünnter Salzsäure wird die Reaktionsmischung dialytisch weitgehend entsalzt und im Vakuum eingeengt. Man erhält die Verbindung der Formel 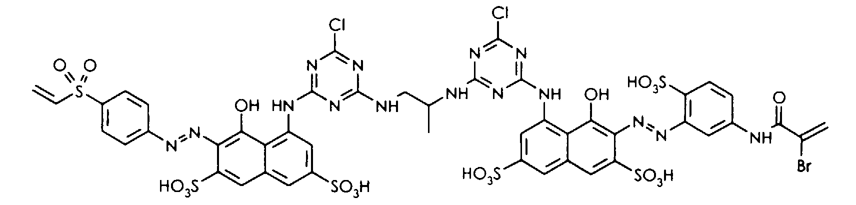 die Baumwolle in einer roten Nuance mit guten Allgemeinechtheiten färbt.

Beispiele 27-31: Analog wie im Beispiel 26 beschrieben lassen sich die folgenden Farbstoffe herstellen, die jeweils Cellulose in einer roten Nuance mit guten Allgemeinechtheiten färben.

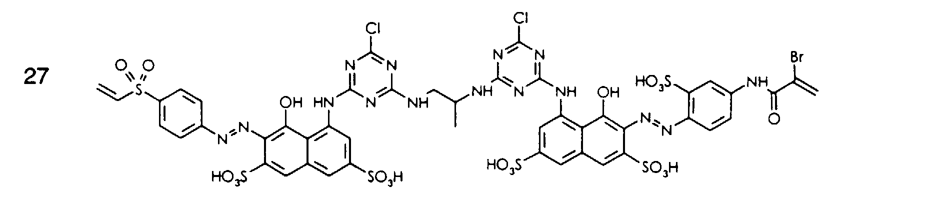

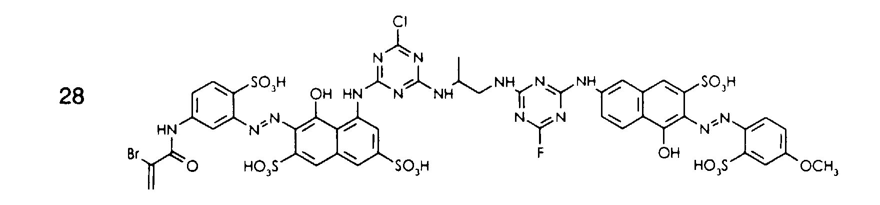

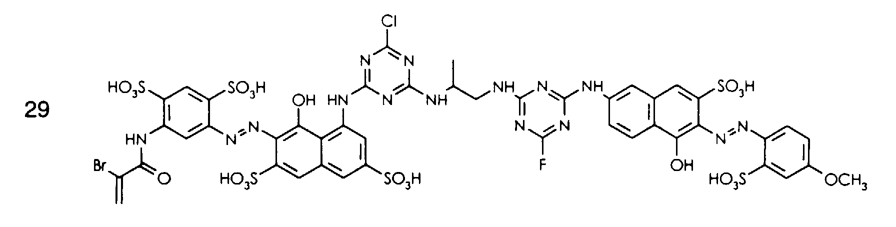

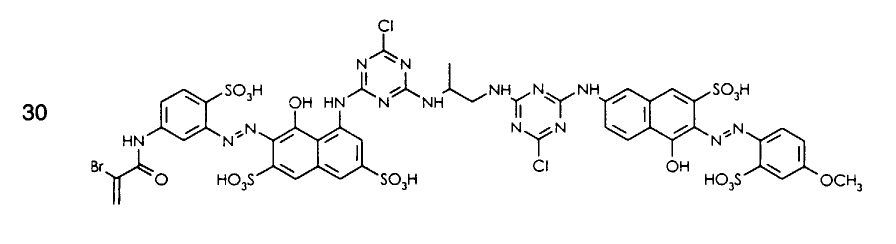

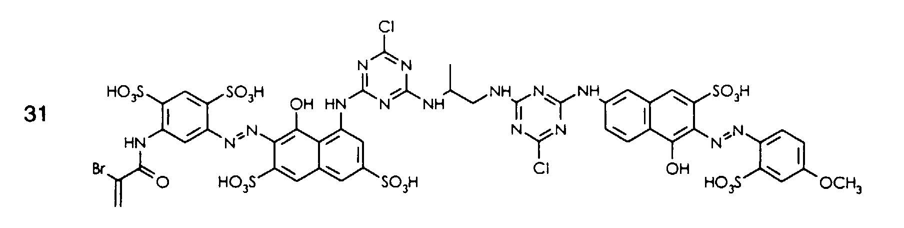

Beispiel 32: 19 Teile Cyanurchlorid werden mit 50 Teilen Eis/Wasser und 5 Teilen Dinatriumhydrogenphosphat unter Zusatz eines Netzmittels kräftig durchmischt. Zu der entstandenen Suspension wird eine neutrale Lösung von 32 Teilen 1-Amino-8-hydroxynaphthalin-3,6-disulfonsäure so zugetropft, dass die Reaktionsmischung einen pH-Wert von 3 nicht überschreitet. Man hält danach noch für 2 Stunden den pH-Wert bei 3 durch Zugabe von Natriumhydroxidlösung (Reaktionsmischung 1).

Zu einer Anschlämmung von 19 Teilen Cyanurchlorid mit 50 Teilen Eis/Wasser, 5 Teilen Dinatriumhydrogenphosphat unter Netzmittelzusatz werden 19 Teile 1,3-Phenylendiamin-4-sulfonsäure, neutral in Wasser gelöst, so zugetropft, dass der pH der Reaktionsmischung den Wert 2,5 nicht überschreitet. Danach hält man den pH-Wert durch Zugabe von Natriumhydroxidlösung noch für 2 Stunden bei 3, fügt dann 6 Teile Ethanolamin hinzu und erhöht den pH-Wert mit Natriumhydroxidlösung auf 9 und hält bei diesem Wert. Die Temperatur lässt man dabei auf Raumtemperatur ansteigen. Nach beendeter Kondensation wird die Reaktionsmischung auf 0°C abgekühlt, mit 7 Teilen Natriumnitrit, 50 Teilen Eis und 30 Teilen konzentrierter Salzsäure versetzt und 1,5 Stunden diazotiert. Ueberschüssiges Nitrit wird mit Sulfaminsäure vernichtet (Reaktionslösung 2).

Die wie oben angegeben erhältlichen Reaktionslösungen 1 und 2 werden vereinigt, der pH-Wert im Lauf von 3 Stunden mit Natriumacetat-Lösung auf 3,5 angehoben und die Temperatur zwischen 0 und 5°C gehalten. Man erwärmt dann auf 30 bis 35°C und tropft eine neutrale Lösung von 32 Teilen 1-Amino-8-hydroxynaphthalin-3,6-disulfonsäure in 300 Teilen Wasser so zu, dass ein pH-Wert von 3,5 nicht überschritten wird (Reaktionslösung 3).

40 Teile 5-(2,3-Dibrompropionylamido)-anilin-2-sulfonsäure werden in 400 Teilen Wasser suspendiert, mit 7 Teilen Natriumnitrit, 50 Teilen Eis und 30 Teilen konzentrierter Salzsäure versetzt und 3 Stunden lang gerührt. Ueberschüssiges Nitrit wird mit Sulfaminsäure vernichtet und die erhaltenen Suspension zu der wie oben angegeben erhältlichen Reaktionslösung 3 gegeben. Man stellt den pH-Wert innerhalb von ca. 2 Stunden mit verdünnter Natriumhydroxidlösung auf 7 ein, erwärmt anschliessend auf eine Innentemperatur von 30°C, erhöht den pH-Wert auf 11 und hält ihn während 30 Minuten bei diesem Wert mit verdünnter Natriumhydroxidlösung. Am Ende wird die Reaktionsmischung mit verdünnter Salzsäure auf einen pH-Wert von 7 eingestellt, dialytisch entsalzt und im Vakuum eingedampft. Man erhält die Verbindung der Formel 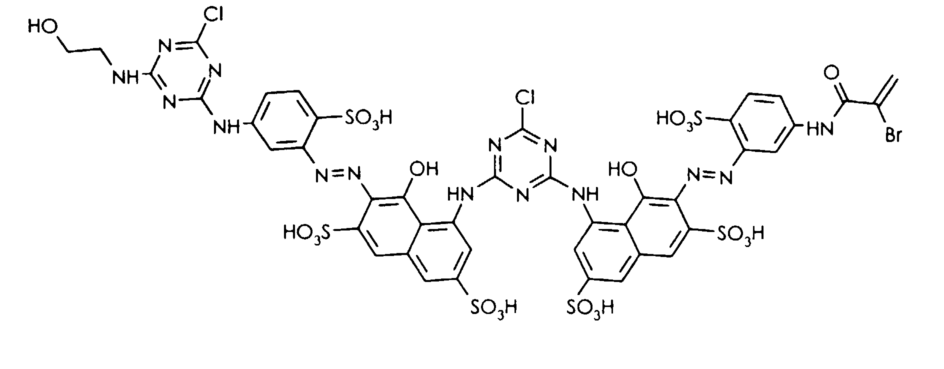 als Pulver, welche Cellulose in roten Farbtönen mit guten Allgemeinechtheiten färbt.

Beispiele 33-37: Analog wie im Beispiel 32 beschrieben lassen sich die folgenden Farbstoffe herstellen, die jeweils Cellulose in einer roten Nuance mit guten Allgemeinechtheiten färben.

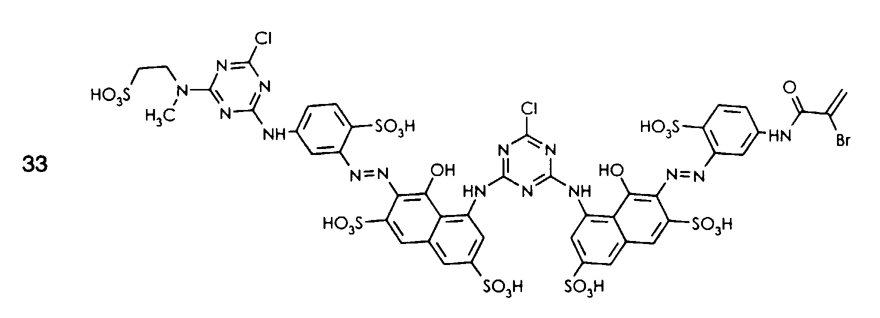

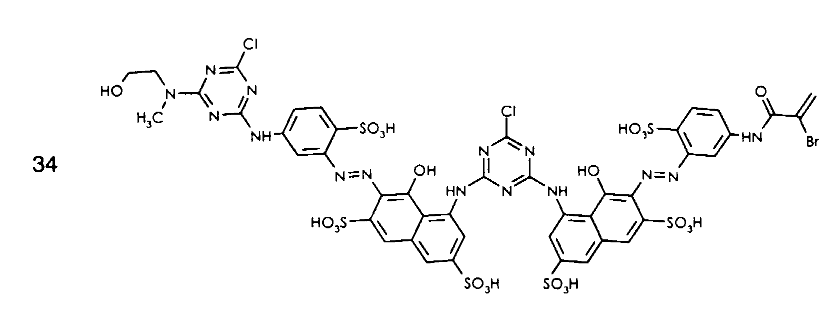

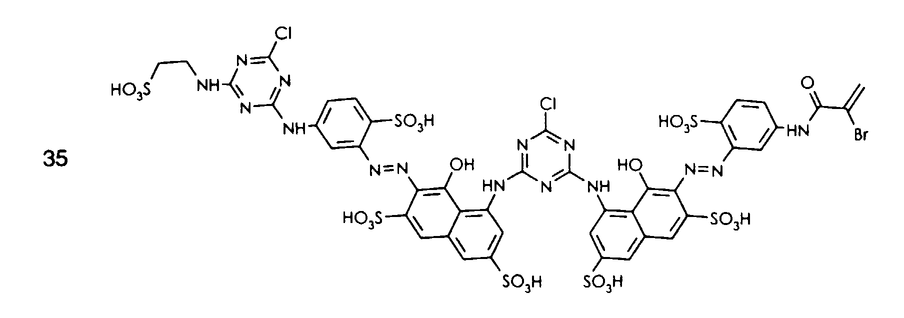

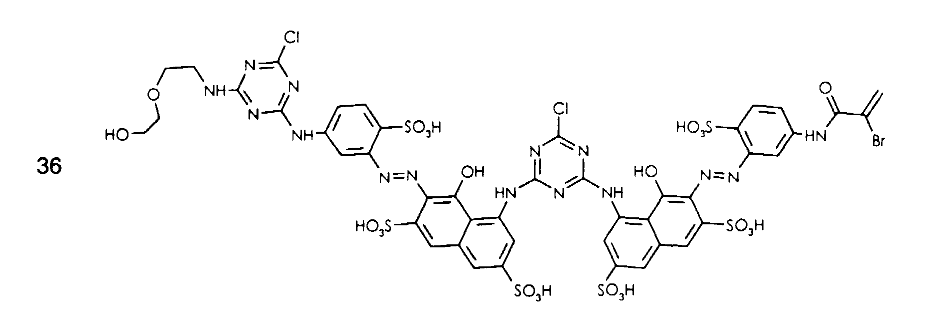

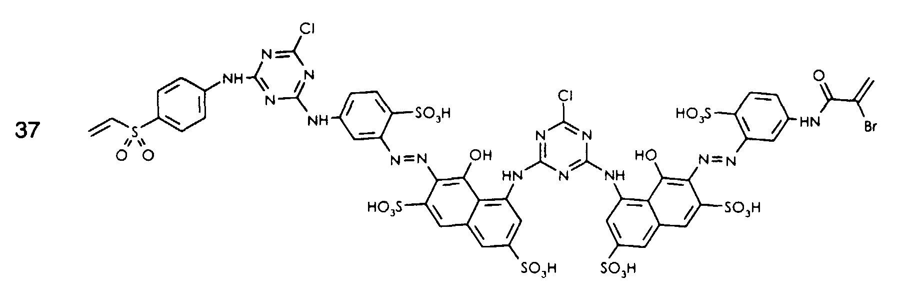

Färbevorschrift I 2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II 2 Teile des gemäss Beispiel 1 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III 8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV 4 Teile des gemäss Beispiel 6 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V 6 Teile des gemäss Beispiel 6 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI 2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII 0,1 Teile Farbstoff gemäss Beispiel 2 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante Färbung erhalten, die sehr gute Licht- und Nassechtheiten aufweist.

Druckvorschrift I 3 Teile des gemäss Beispiel 1 erhaltenen Reaktivfarbstoffes werden unter schnellem Rühren in 100 Teile einer Stammverdickung, enthaltend 50 Teile 5%ige Natriumalginat verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II 5 Teile des gemäss Beispiel 2 erhaltenen Reaktivfarbstoffes werden unter schnellem Rühren in 100 Teile einer Stammverdickung, enthaltend 50 Teile 5%ige Natriumalgin verdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 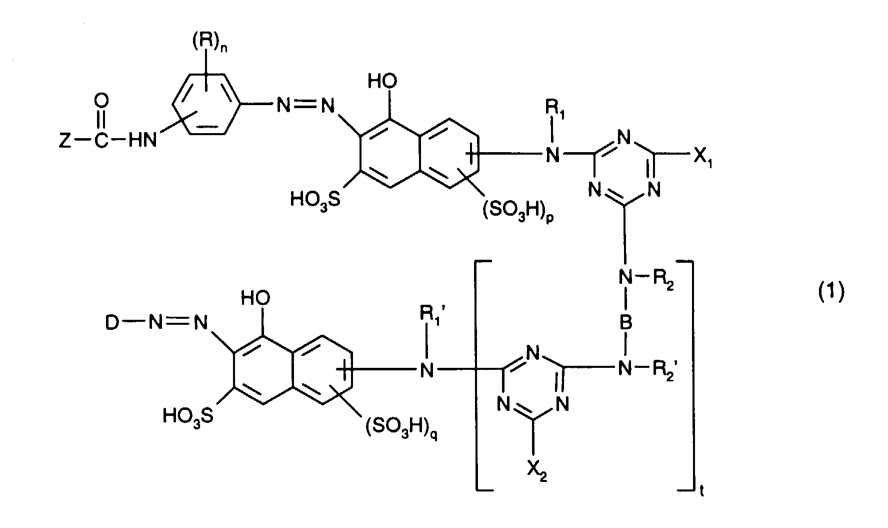 worin
B ein aliphatisches Brückenglied ist,
(R)ₙ für n gleiche oder verschiedene Reste aus der Gruppe C₁-C₄-Alkyl, C₁-C₄-Alkoxy, Halogen und Sulfo steht,
n die Zahl 0, 1 oder 2 ist,
R₁, R₁', R₂ und R₂' unabhängig voneinander je Wasserstoff oder gegebenenfalls substituiertes C₁-C₄-Alkyl bedeuten,
X₁ und X₂ unabhängig voneinander je für Halogen, 3-Carboxypyridin-1-yl oder 3-Carbamoylpyridin-1-yl stehen,
Z einen Rest -CHX-CH₂-X oder -CX=CH₂ und X Halogen bedeuten,
D ein Rest der Formel 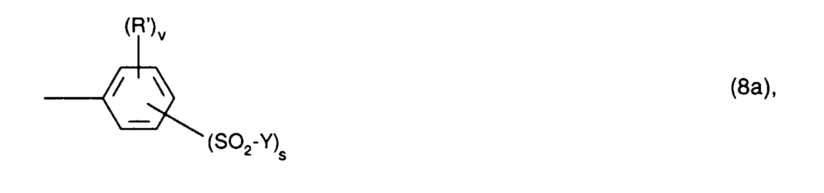 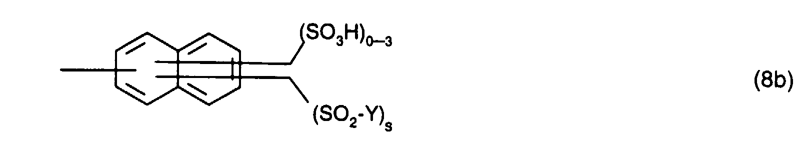 oder 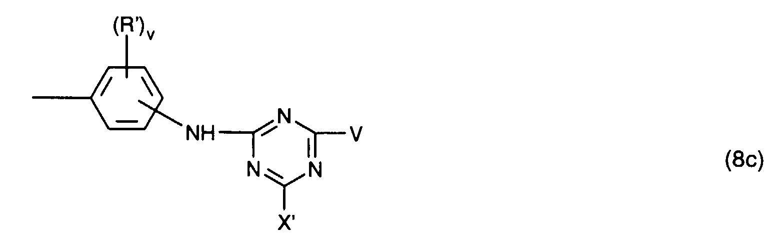 ist, worin
(R')ᵥ für v gleiche oder verschiedene Reste aus der Gruppe Sulfo, C₁-C₄-Alkyl, C₁-C₄-Alkoxy und Halogen steht, v die Zahl 0, 1, 2 oder 3 und s die Zahl 0 oder 1 bedeuten,
Y Vinyl oder einen Rest -CH₂-CH₂-U bedeutet und U eine alkalisch abspaltbare Gruppe ist,
X' eine als Anion abspaltbare Gruppe bedeutet,
V eine als Anion abspaltbare Gruppe, ein nicht-reaktiver Substituent oder ein Rest der Formel 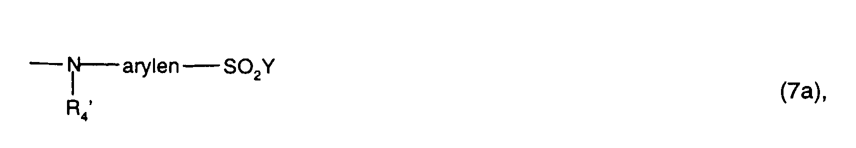 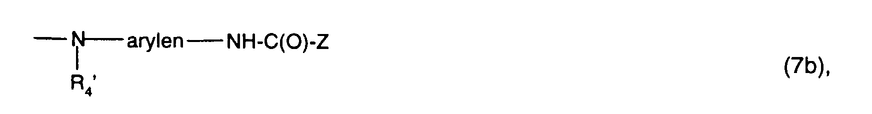
-NH-(CH₂)₂₋₃-SO₂Y (7c)
oder
-NH-(CH₂)₂₋₃-O-(CH₂)₂₋₃-SO₂Y (7d)
ist, wobei
R₄' Wasserstoff oder gegebenenfalls substituiertes C₁-C₄-Alkyl ist,
arylen einen unsubstituierten oder durch Sulfo, Carboxy, C₁-C₄-Alkyl, C₁-C₄-Alkoxy oder Halogen substituierten Phenylen- oder Naphthylenrest bedeutet, und für
Y und Z die zuvor angegebenen Bedeutungen gelten,
und p, q und t unabhängig voneinander je die Zahl 0 oder 1 bedeuten.

2. Verbindungen gemäss Anspruch 1, dadurch gekennzeichnet, dass (R)ₙ für 0, 1 oder 2 gleiche oder verschiedene Reste aus der Gruppe Methyl, Methoxy und Sulfo steht.

3. Verbindungen gemäss Anspruch 1 oder 2, dadurch gekennzeichnet, dass X₁ Chlor und X₂ Chlor oder Fluor bedeuten.

4. Verbindungen gemäss einem der Ansprüche 1 bis 3, dadurch gekennzeichnet, dass R₁ und R₁' unabhängig voneinander je Wasserstoff oder C₁-C₄-Alkyl bedeuten.

5. Verbindungen gemäss einem der Ansprüche 1 bis 4, dadurch gekennzeichnet, dass R₂ und R₂' unabhängig voneinander je Wasserstoff oder unsubstituiertes oder durch Hydroxy substituiertes C₁-C₄-Alkyl bedeuten.

6. Verbindungen gemäss einem der Ansprüche 1 bis 5, dadurch gekennzeichnet, dass p für die Zahl 1 steht.

7. Verbindungen gemäss einem der Ansprüche 1 bis 6, dadurch gekennzeichnet, dass D ein Rest der Formel 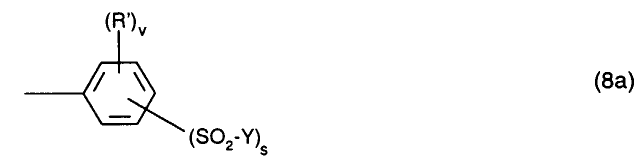 oder 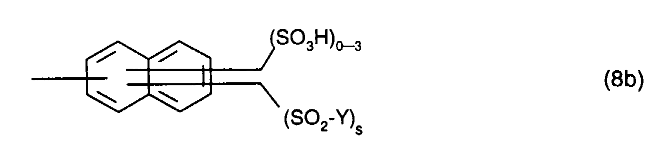 ist, worin (R')ᵥ für v gleiche oder verschiedene Reste aus der Gruppe Methyl, Methoxy und Sulfo steht, Y Vinyl oder β-Sulfatoethyl bedeutet und v die Zahl 0, 1 oder 2 und s die Zahl 0 oder 1 sind, wobei die Summe von (v+s) ≥ 1 beträgt.

8. Verbindungen gemäss einem der Ansprüche 1 bis 7, dadurch gekennzeichnet, dass B geradkettiges oder verzweigtes gegebenenfalls durch Hydroxy, C₁-C₄-Alkoxy, Sulfato oder Sulfo substituiertes und/oder einfach oder mehrfach durch -O- oder -NR₃- unterbrochenes C₂-C₁₂-Alkylen bedeutet, worin R₃ Wasserstoff oder C₁-C₄-Alkyl ist.

9. Verbindungen gemäss einem der Ansprüche 1 bis 8, dadurch gekennzeichnet, dass B geradkettiges oder verzweigtes C₂-C₆-Alkylen bedeutet.

10. Verbindungen gemäss Anspruch 1 der Formel (1), worin B geradkettiges oder verzweigtes C₂-C₆-Alkylen, welches unsubstituiert oder durch Hydroxy, Sulfo oder Sulfato substituiert ist, bedeutet, (R)ₙ für n gleiche oder verschiedene Reste aus der Gruppe C₁-C₄-Alkyl, C₁-C₄-Alkoxy und Sulfo steht, n die Zahl 0, 1 oder 2 ist, R₁ und R₁' unabhängig voneinander je für Wasserstoff oder C₁-C₄-Alkyl stehen, R₂ und R₂' unabhängig voneinander je Wasserstoff oder unsubstituiertes oder durch Hydroxy substituiertes C₁-C₄-Alkyl bedeuten, X₁ und X₂ unabhängig voneinander je Chlor oder Fluor sind, Z für einen Rest -CHX-CH₂-X oder -CX=CH₂ steht und X Chlor oder Brom bedeutet, D ein unsubstituierter oder durch Sulfo, C₁-C₄-Alkyl, C₁-C₄-Alkoxy, Halogen oder durch einen faserreaktiven Rest -SO₂-Y substituierter Phenyl- oder Naphthylrest ist, Y für Vinyl oder β-Sulfatoethyl steht, und p, q und t unabhängig voneinander je die Zahl 0 oder 1 bedeuten.

11. Verbindungen gemäss einem der Ansprüche 1 bis 10, dadurch gekennzeichnet, dass t die Zahl 0 bedeutet.

12. Verbindungen gemäss Anspruch 1 der Formel 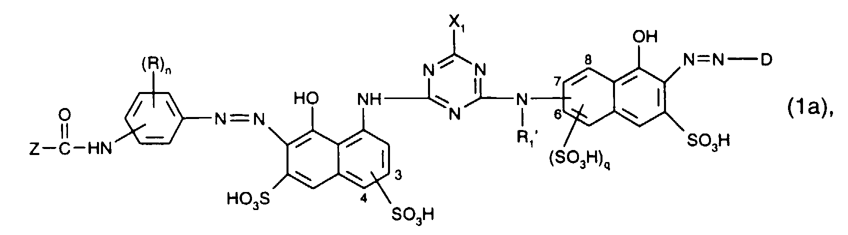 worin Z die Gruppe -CHBr-CH₂Br oder -CBr=CH₂ bedeutet, (R)ₙ für 0 bis 2 gleiche oder verschiedene Reste aus der Gruppe Sulfo, Methyl und Methoxy steht, X₁ Chlor ist, R₁' Wasserstoff, Methyl oder Ethyl bedeutet, q für die Zahl 0 oder 1 steht und D ein Rest der Formel 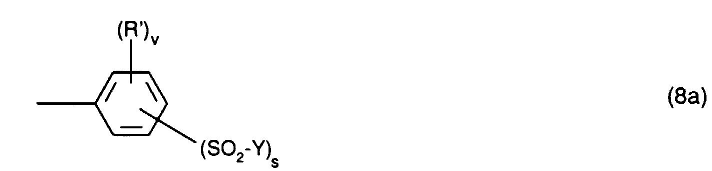 ist, worin (R')ᵥ für v gleiche oder verschiedene Reste aus der Gruppe Methyl, Methoxy und Sulfo steht, Y Vinyl oder β-Sulfatoethyl bedeutet und v die Zahl 0, 1 oder 2 und s die Zahl 0 oder 1 sind, wobei die Summe von (v+s) ≥ 1 beträgt.

13. Verbindungen gemäss Anspruch 1 der Formel 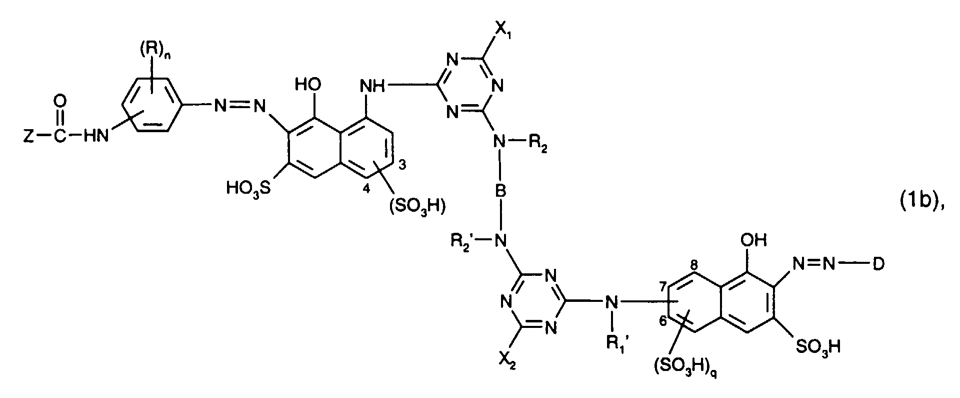 worin B geradkettiges oder verzweigtes C₂-C₆-Alkylen bedeutet, Z die Gruppe -CHBr-CH₂Br oder -CBr=CH₂ bedeutet, (R)ₙ für 0 bis 2 gleiche oder verschiedene Reste aus der Gruppe Sulfo, Methyl und Methoxy steht, X₁ Chlor und X₂ Chlor oder Fluor sind, R₁' Wasserstoff, Methyl oder Ethyl und R₂ und R₂' unabhängig voneinander je Wasserstoff, Methyl, Ethyl oder β-Hydroxyethyl bedeuten, q für die Zahl 0 oder 1 steht und D ein Rest der Formel 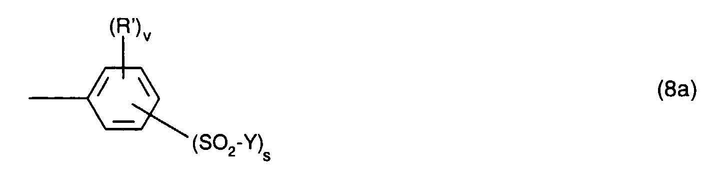 ist, worin (R')ᵥ für v gleiche oder verschiedene Reste aus der Gruppe Methyl, Methoxy und Sulfo steht, Y Vinyl oder β-Sulfatoethyl bedeutet und v die Zahl 0, 1 oder 2 und s die Zahl 0 oder 1 sind, wobei die Summe von (v+s) ≥ 1 beträgt.

14. Verfahren zur Herstellung von Verbindungen der Formel (1) gemäss Anspruch 1, dadurch gekennzeichnet, dass man je in etwa 1 Moläquivalent einer Verbindung der Formel 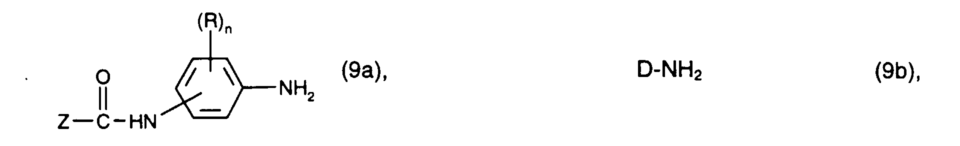 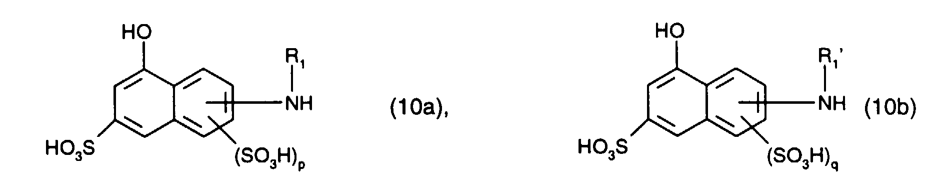 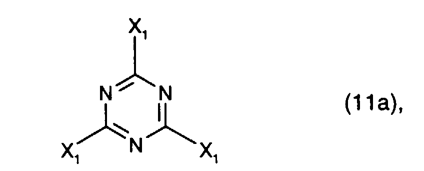 und, wenn t die Zahl 1 bedeutet, zusätzlich jeweils in etwa 1 Moläquivalent einer Verbindung der Formel 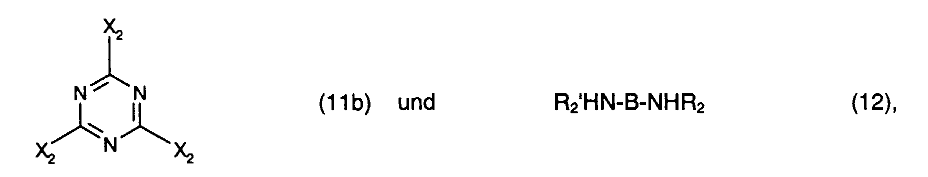 in beliebiger Reihenfolge miteinander umsetzt, wobei B, D, (R)ₙ, R₁, R₁', R₂, R₂' X₁, X₂, Z, p, q und t jeweils die zuvor angegebene Bedeutung haben.

15. Verwendung von Verbindungen der Formel (1) gemäss einem der Ansprüche 1 bis 13 zum Färben oder Bedrucken von hydroxylgruppenhaltigen oder stickstoffhaltigen Fasermaterialien.

16. Verwendung gemäss Anspruch 15, dadurch gekennzeichnet, dass man cellulosehaltige Fasermaterialien, insbesondere baumwollhaltige Fasermaterialien, färbt oder bedruckt.

## Claims

1. A compound of the formula 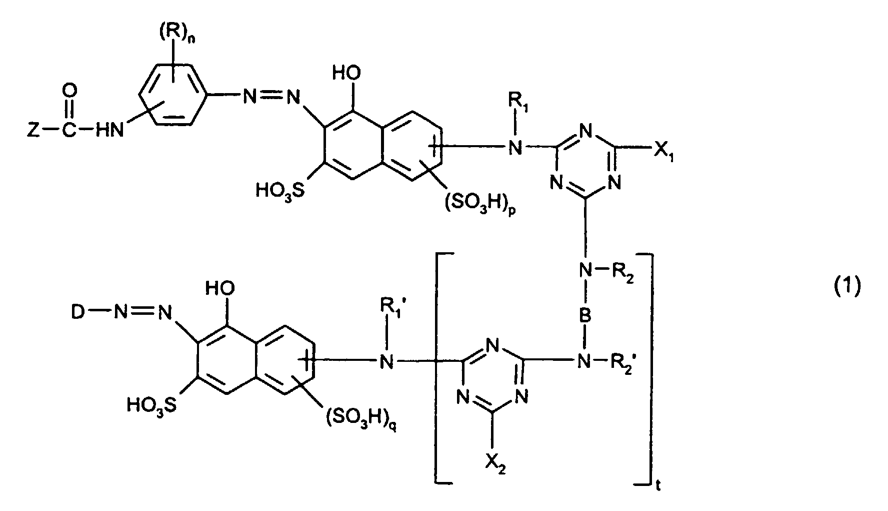 in which
B is an aliphatic bridge member,
(R)ₙ is n identical or different radicals from the group consisting of C₁-C₄alkyl, C₁-C₄alkoxy, halogen and sulfo,
n is the number 0, 1 or 2,
R₁, R₁', R₂ and R₂' independently of one another are each hydrogen or substituted or unsubstituted C₁-C₄alkyl,
X₁ and X₂ independently of one another are each halogen, 3-carboxypyridin-1-yl or 3-carbamoylpyridin-1-yl,
Z is a radical -CHX-CH₂-X or -CX=CH₂ and X is halogen,
D is a radical of the formula 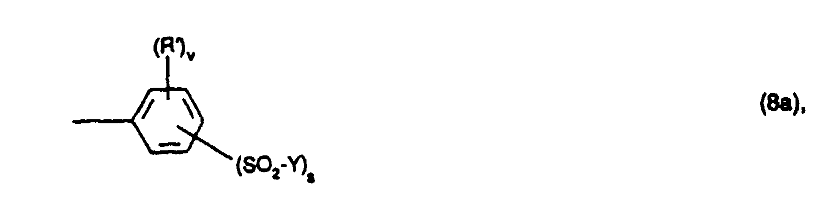 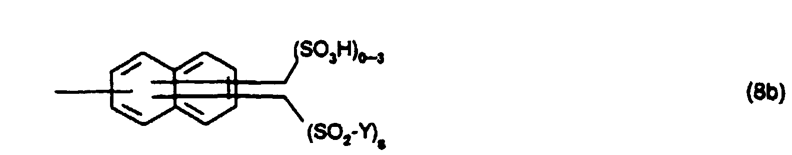 or 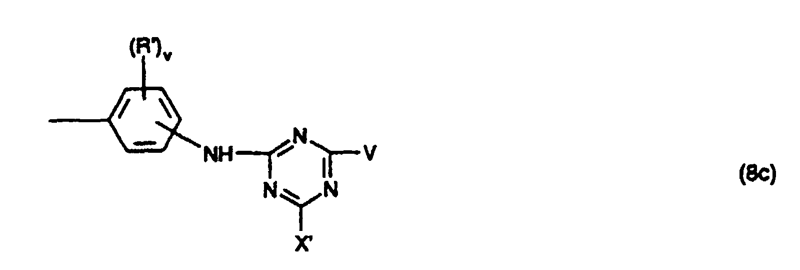 in which
(R')ᵥ is v identical or different radicals from the group consisting of sulfo, C₁-C₄alkyl, C₁-C₄alkoxy and halogen, v is the number 0, 1, 2 or 3 and s is the number 0 or 1,
Y is vinyl or a radical -CH₂-CH₂-U and U is an alkali-eliminable group,
X' is a group which may be eliminated as an anion,
V is a group which may be eliminated as an anion, or is a non-reactive substituent or a radical of the formula 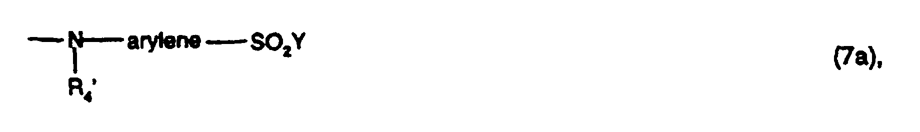 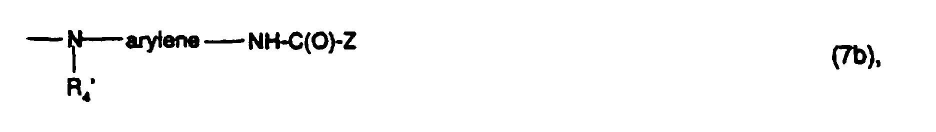
-NH-(CH₂)₂₋₃-SO₂Y (7c),
or
-NH-(CH₂)₂₋₃-O-(CH₂)₂₋₃-SO₂Y (7d)
where
R₄' is hydrogen or substituted or unsubstituted C₁-C₄alkyl,
arylene is an unsubstituted or sulfo-, carboxyl-, C₁-C₄alkyl-, C₁-C₄alkoxy- or halogen-substituted phenylene or naphthylene radical, and
Y and Z are as defined above,
and p, q and t independently of one another are each the number 0 or 1.

2. A compound according to daim 1, in which (R)ₙ is 0, 1 or 2 identical or different radicals from the group consisting of methyl, methoxy and sulfo.

3. A compound according to claim 1 or 2, in which X₁ is chlorine and X₂ is chlorine or fluorine.

4. A compound according to any one of claims 1 to 3, in which R₁ and R₁' independently of one another are each hydrogen or C₁-C₄alkyl.

5. A compound according to any one of claims 1 to 4, in which R₂ and R₂' independently of one another are each hydrogen or C₁-C₄alkyl or unsubstituted or substituted by hydroxyl.

6. A compound according to any one of claims 1 to 5, in which p is the number 1.

7. A compound according to any one of claims 1 to 6, in which D is a radical of the formula 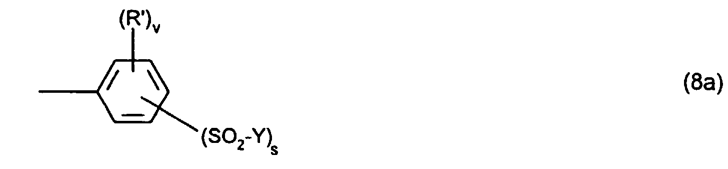 or 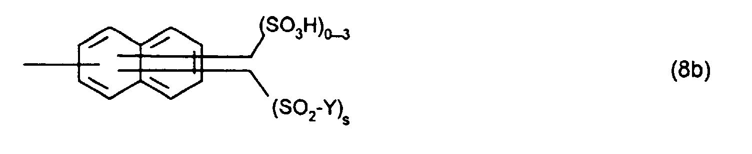 in which (R')ᵥ is v identical or different radicals from the group consisting of methyl, methoxy and sulfo, Y is vinyl or β-sulfatoethyl and v is the number 0, 1 or 2 and s is the number 0 or 1, where the sum of (v+s) is ≥ 1.

8. A compound according to any one of claims 1 to 7, in which B is straight-chain or branched C₂-C₁₂alkylene which is unsubstituted or substituted by hydroxyl, C₁-C₄alkoxy, sulfato or sulfo and/or interrupted once or several times by -O- or -NR₃-, in which R₃ is hydrogen or C₁-C₄alkyl.

9. A compound according to any one of claims 1 to 8, in which B is straight-chain or branched C₂-C₆alkylene.

10. A compound according to claim 1 of the formula (1), in which B is straight-chain or branched C₂-C₆alkylene, which is unsubstituted or substituted by hydroxyl, sulfo or sulfato, (R)ₙ is n identical or different radicals from the group consisting of C₁-C₄alkyl, C₁-C₄alkoxy and sulfo, n is the number 0, 1 or 2, R₁ and R₁' independently of one another are each hydrogen or C₁-C₄alkyl, R₂ and R₂' independently of one another are each hydrogen or C₁-C₄alkyl which is unsubstituted or substituted by hydroxyl, X₁ and X₂ independently of one another are each chlorine or fluorine, Z is a radical -CHX-CH₂-X or -CX=CH₂ and X is chlorine or bromine, D is a phenyl or naphthyl radical which is unsubstituted or substituted by sulfo, C₁-C₄alkyl, C₁-C₄alkoxy, halogen or by a fibre-reactive radical -SO₂-Y, Y is vinyl or β-sulfatoethyl and p, q and t independently of one another are each the number 0 or 1.

11. A compound according to any one of claims 1 to 10, in which t is the number 0.

12. A compound according to claim 1 of the formula 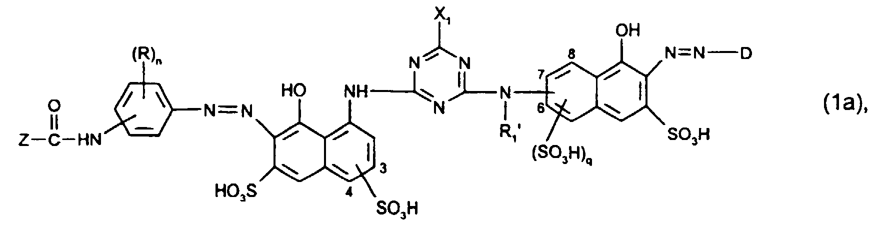 in which Z is the group -CHBr-CH₂Br or -CBr=CH₂, (R)ₙ is 0 to 2 identical or different radicals from the group consisting of sulfo, methyl and methoxy, X₁ is chlorine, R₁' is hydrogen, methyl or ethyl, q is the number 0 or 1 and D is a radical of the formula 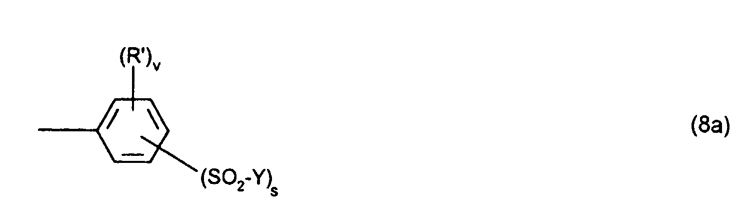 in which (R')ᵥ is v identical or different radicals from the group consisting of methyl, methoxy and sulfo, Y is vinyl or β-sulfatoethyl and v is the number 0, 1 or 2 and s is the number 0 or 1, where the sum of (v+s) is ≥ 1.

13. A compound according to claim 1 of the formula 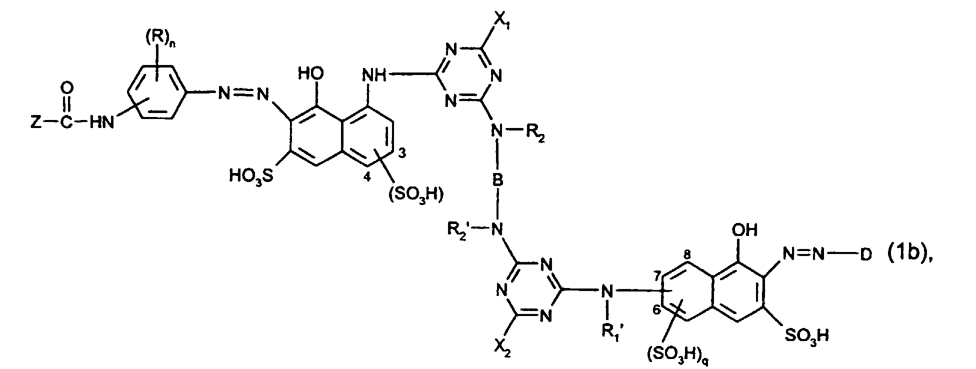 in which B is straight-chain or branched C₂-C₆-alkylene, Z is the group -CHBr-CH₂Br or - -Br=CH₂, (R)ₙ is 0 to 2 identical or different radicals from the group consisting of sulfo, methyl and methoxy, X₁ is chlorine and X₂ is chlorine or fluorine, R₁' is hydrogen, methyl or ethyl and R₂ and R₂' independently of one another are each hydrogen, methyl, ethyl or β-hydroxyethyl, q is the number 0 or 1 and D is a radical of the formula 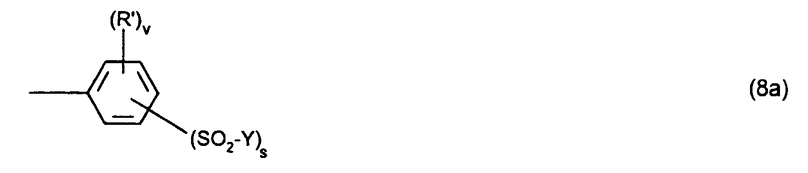 in which (R')ᵥ is v identical or different radicals from the group consisting of methyl, methoxy and sulfo, Y is vinyl or β-sulfatoethyl and v is the number 0, 1 or 2 and s is the number 0 or 1, where the sum of (v+s) is ≥ 1.

14. A process for the preparation of a compound of the formula (1) according to claim 1, which comprises reacting in each case approximately 1 molar equivalent of a compound of the formula 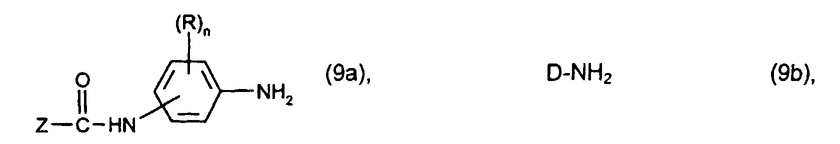 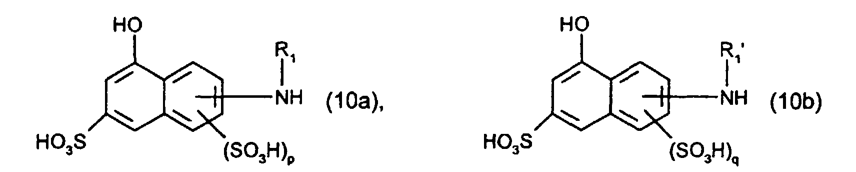 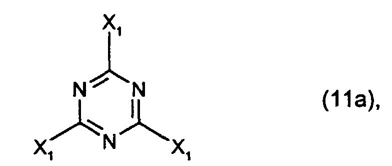 and, if t is the number 1, additionally in each case approximately 1 molar equivalent of a compound of the formula 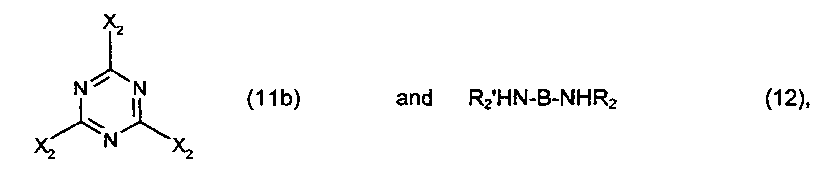 in which B, D, (R)ₙ, R₁, R₁', R₂, R₂' X₁, X₂, Z, p, q and t are in each case as defined above, with one another in any order.

15. The use of a compound of the formula (1) according to any one of claims 1 to 13 for dyeing or printing fibre materials containing hydroxyl groups or containing nitrogen.

16. The use according to claim 15, wherein cellulosic fibre materials, in particular fibre materials comprising cotton, are dyed or printed.

## Revendications

1. Composés de formule 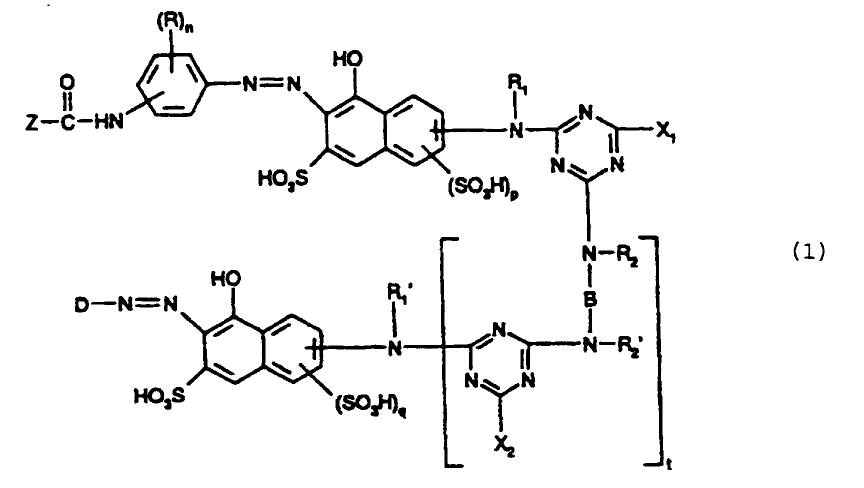 où
B représente un élément de pontage aliphatique,
(R)ₙ représente n restes identiques ou différents pris dans le groupe des restes alkyle en C₁-C₄, alkoxy en C₁-C₄, halogène et sulfo,
n vaut 0, 1 ou 2,
R₁, R'₁, R₂ et R'₂ représentent chacun, indépendamment l'un de l'autre, des atomes d'hydrogène ou des groupes alkyle en C₁-C₄ éventuellement substitué,
X₁ et X₂ représentent chacun, indépendamment l'un de l'autre, des atomes d'halogènes, des groupes 3-carboxypyridin-1-yle ou 3-carbamoylpyridin-1-yle,
Z représente un reste -CHX-CH₂-S ou -CX=CH₂ et X représente un atome d'halogène,
D représente un reste de formule 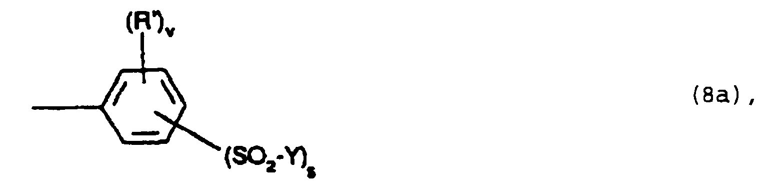 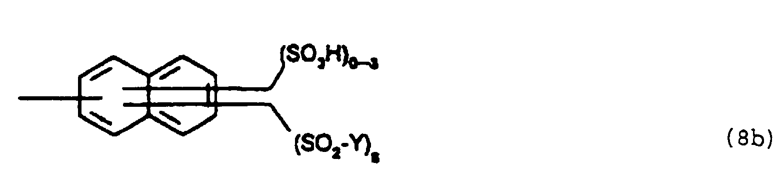 ou 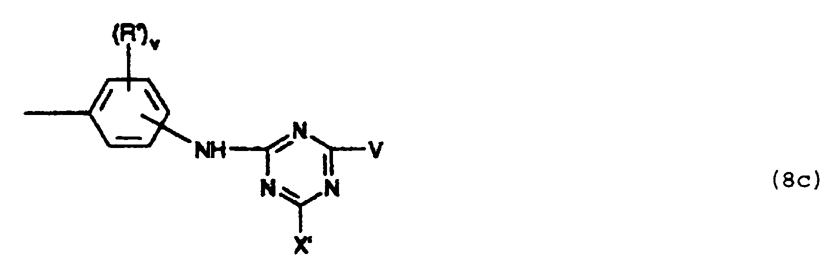 où
(R')ᵥ représente v restes identiques ou différents pris dans le groupe des restes sulfo, alkyle en C₁-C₄, alkoxy en C₁-C₄ et halogène, v vaut 0, 1, 2 ou 3, et s vaut 0 ou 1,
Y représente un groupe vinyle ou un reste -CH₂-CH₂-U et U est un groupe dissociable en milieu alcalin,
X' représente un groupe dissociable en tant qu'anion,
V représente un groupe dissociable en tant qu'anion, un substituant non réactif ou un reste de formule 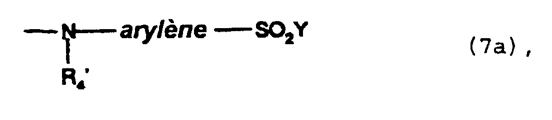 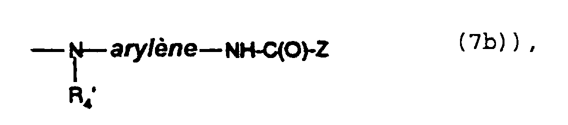
-NH-(CH₂)₂₋₃-SO₂Y (7c)
ou
-NH-(CH₂)₂₋₃-O-(CH₂)₂₋₃-SO₂Y (7d)
où
R'₄ représente un atome d'hydrogène ou un groupe alkyle en C₁-C₄ éventuellement substitué,
arylène représente un reste phénylène ou naphtylène non substitué ou substitué par des substituants sulfo, carboxy, alkyle en C₁-C₄, alkoxy en C₁-C₄ ou halogène, et
Y et Z possèdent les significations données auparavant, et
p, q et t valent indépendamment les uns des autres 0 ou 1.

2. Composés selon la revendication 1, caractérisés en ce que (R)ₙ représente 0, 1 ou 2 restes identiques ou différents pris dans le groupes des restes méthyle, méthoxy et sulfo.

3. Composés selon la revendication 1 ou 2, caractérisés en ce que X₁ représente un atome de chlore et X₂ représente un atome de chlore ou de fluor.

4. Composés selon l'une des revendications 1 à 3, caractérisés en ce que R₁ et R'₁ représentent chacun, indépendamment l'un de l'autre, un atome d'hydrogène ou un groupe alkyle en C₁-C₄.

5. Composés selon l'une des revendications 1 à 4, caractérisés en ce que R₂ et R'₂ représentent chacun, indépendamment l'un de l'autre, un atome d'hydrogène ou un groupe alkyle en C₁-C₄ non substitué ou substitué par un substituant hydroxy.

6. Composés selon l'une des revendications 1 à 5, caractérisés en ce que p vaut 1.

7. Composés selon l'une des revendications 1 à 6, caractérisés en ce que D représente un reste de formule 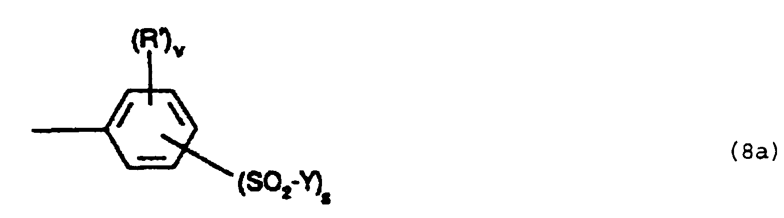 ou 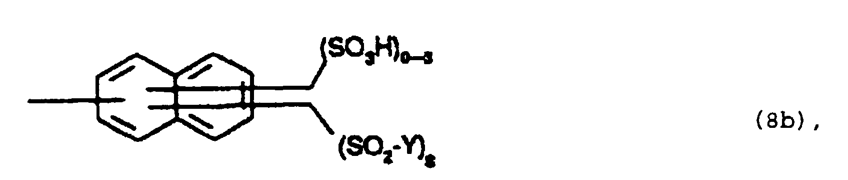 où (R')ᵥ représente v restes identiques ou différents pris dans le groupes restes méthyle, méthoxy et sulfo, Y représente un groupe vinyle ou β-sulfatoéthyle et v vaut 0, 1 ou 2 et s vaut 0 ou 1, la somme de (v+s)≥1.

8. Composés selon l'une des revendications 1 à 7, caractérisés en ce que B représente un groupe alkylène en C₂-C₁₂ à chaîne droite ou ramifiée, éventuellement substitué par des substituants hydroxy, alkoxy en C₁-C₄, sulfato ou sulfo et/ou interrompu une ou plusieurs fois par des groupes -O- ou -NR₃-, où R₃ représente un atome d'hydrogène ou un groupe alkyle en C₁-C₄.

9. Composés selon l'une des revendications 1 à 8, caractérisés en ce que B représente un groupe alkylène en C₂-C₆ à chaîne droite ou ramifiée.

10. Composés selon la revendication 1 de formule (1), où B représente un groupe alkylène en C₂-C₆ à chaîne droite ou ramifiée lequel est non substitué ou substitué par des groupes hydroxy, sulfo ou sulfato, (R)ₙ représente n restes identiques ou différents pris dans le groupe des restes alkyle en C₁-C₄, alkoxy en C₁-C₄ ou sulfo, n vaut 0, 1 ou 2, R₁ et R'₁ représentent chacun, indépendamment l'un de l'autre, un atome d'hydrogène ou un groupe alkyle en C₁-C₄, R₂ et R'₂ représentent chacun, indépendamment l'un de l'autre, un atome d'hydrogène ou un groupe alkyle en C₁-C₄ non substitué ou substitué par un substituant hydroxy, X₁ et X₂ représentent chacun, indépendamment l'un de l'autre, un atome de chlore ou de fluor, Z représente un reste -CHX-CH₂-S ou -CX=CH₂ et X représente un atome de chlore ou de brome, D représente un reste phényle ou naphtyle non substitué ou substitué par des substituants sulfo, alkyle en C₁-C₄, alkoxy en C₁-C₄, halogène ou par un reste réactif sur la fibre -SO₂-Y, Y représente un groupe vinyle ou β-sulfatoéthyle et p, q et t valent indépendamment l'un de l'autre 0 ou 1.

11. Composés selon l'une des revendications 1 à 10, caractérisés en ce que t vaut 0.

12. Composés selon la revendication 1 de formule 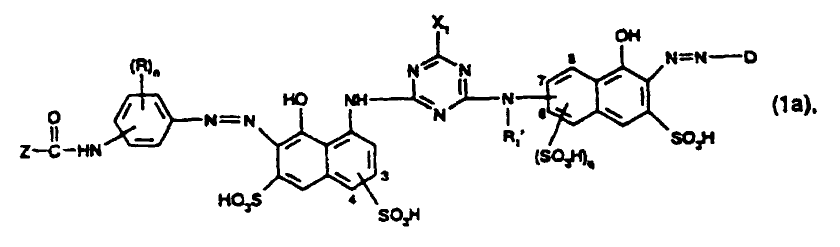 où Z représente le groupe -CHBr-CH₂-Br ou -CBr=CH₂, (R)ₙ représente 0 à 2 restes identiques ou différents pris dans le groupe des restes sulfo, méthyle et méthoxy, X₁ représente un atome de chlore, R₁ représente un atome d'hydrogène, un groupe méthyle ou éthyle, q vaut 0 ou 1 et D représente un reste de formule 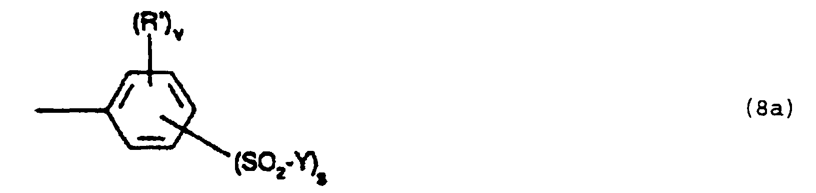 où (R')ᵥ représente v restes identiques ou différents pris dans le groupe des restes méthyle, méthoxy et sulfo, Y représente un reste vinyle ou β-sulfatoéthyle et v vaut 0, 1 ou 2 et s vaut 0 ou 1, la somme de (v+s)≥1.

13. Composés selon la revendication 1 de formule 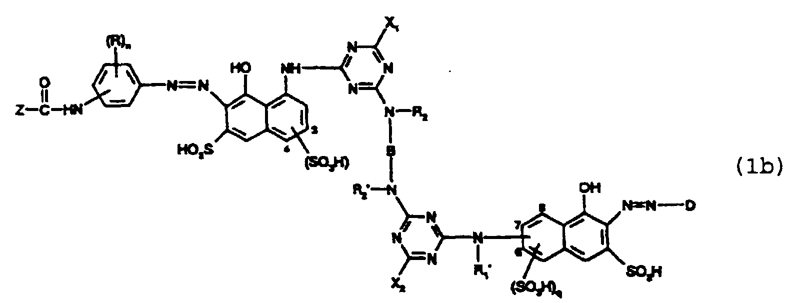 où B représente un groupe alkylène en C₂-C₆ à chaîne droite ou ramifiée, Z représente le groupe -CHBr-CH₂-Br ou -CBr=CH₂, (R)ₙ représente 0 à 2 restes identiques ou différents pris dans le groupe des restes sulfo, méthyle et méthoxy, X₁ représente un atome de chlore et X₂ représente un atome de chlore ou de fluor, R'₁ représente un atome d'hydrogène, un groupe méthyle ou éthyle et R₂ et R'₂ représentent chacun, indépendamment l'un de l'autre, un atome d'hydrogène, des groupes méthyle, éthyle ou β-hydroxyéthyle, q vaut 0 ou 1 et D représente un reste de formule 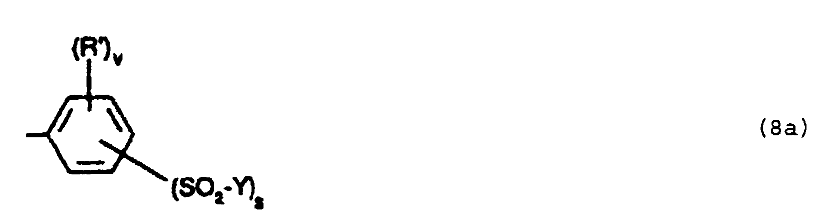 où (R')ᵥ représente v restes identiques ou différents pris dans le groupe des restes méthyle, méthoxy et sulfo, Y représente un reste vinyle ou β-sulfatoéthyle et v vaut 0, 1 ou 2 et s vaut 0 ou 1, la somme de (v+s)≥1.

14. Procédé de préparation de composés de formule (1) selon la revendication 1, caractérisé en ce qu'on fait réagir en succession arbitraire environ 1 équivalent molaire d'un composé de formule 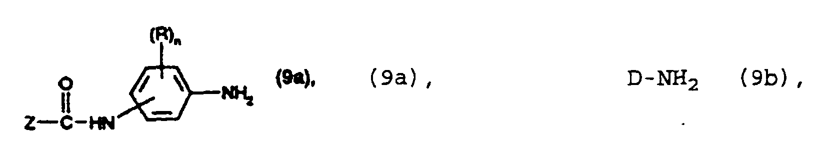 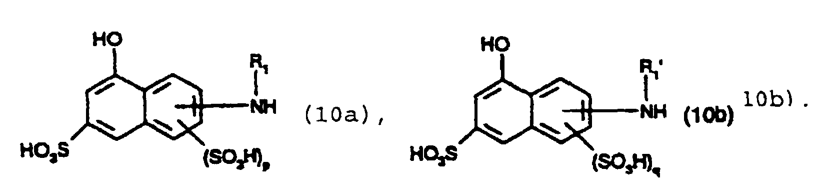 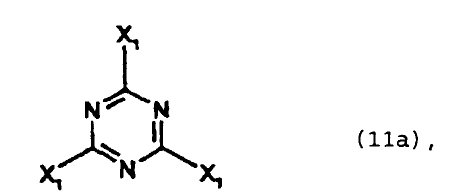 et, lorsque t vaut 1, de plus à chaque fois, environ un équivalent molaire d'un composé de formule 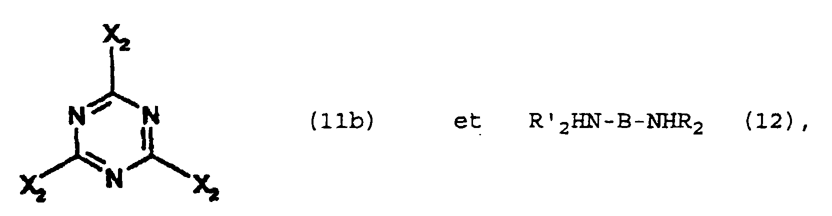 B, D, (R)ₙ, R₁, R'₁, R₂, R'₂, X₁, X₂, Z, p, q et t ayant chacun la signification donnée auparavant.

15. Utilisation de composés de formule (1) selon l'une des revendications 1 à 13 pour la teinture ou l'impression de matières fibreuses contenant des groupes hydroxyle ou azotés.

16. Utilisation selon la revendication 15, caractérisée en ce qu'on teint ou imprime des matières fibreuses cellulosiques, en particulier des matières fibreuses contenant du coton.
